# EUROPÄISCHE PATENTSCHRIFT

(11) **EP 1 327 325 B1**
(45) Veröffentlichungstag und Bekanntmachung des Hinweises auf die Patenterteilung: **26.03.2008**
(21) Anmeldenummer: 01986384.4
(22) Anmeldetag: 04.10.2001
(51) Int. Cl.: H04L 29/08, H04L 12/28, H04L 29/06, H04L 12/56

(54) **VERFAHREN UND SYSTEM ZUM ÜBERTRAGEN VON INFORMATIONEN ZWISCHEN EINEM SERVER UND EINEM MOBILEN CLIENT**
METHOD AND SYSTEM FOR TRANSMITTING INFORMATION BETWEEN A SERVER AND A MOBILE CUSTOMER
PROCEDE ET SYSTEME POUR TRANSMETTRE DES INFORMATIONS ENTRE UN SERVEUR ET UN CLIENT MOBILE

(30) Priorität: 05.10.2000 DE 10050833
(43) Veröffentlichungstag der Anmeldung: 16.07.2003
(73) Patentinhaber: Lesswire AG, 15236 Frankfurt (DE)
(72) Erfinder: PASCOE, Jason, 10119 Berlin (DE); LANGER, Christian, 10249 Berlin (DE)
(74) Vertreter: Eisenführ, Speiser & Partner
(86) Internationale Anmeldenummer: PCT/EP2001/011466
(87) Internationale Veröffentlichungsnummer: WO 2002/030053

(56) Entgegenhaltungen:
- EP-A- 0 992 921
- WO-A-00/22860
- US-A- 5 796 351
- US-A- 5 821 513
- US-A- 5 933 100
- US-A- 5 938 721
- OPPERMANN REINHARD ET AL: "Adaptive Mobile Museum Guide for Information and Learning on Demand" HUMAN-COMPUTER INTERACTION: ERGONOMICS AND USER INTERFACES. PROCEEDINGS OF HCI INTERNATIONAL '99 (8TH INTERNATIONAL CONFERENCE ON HUMAN-COMPUTER INTERACTION), Bd. 2, 22. - 26. August 1999, Seiten 642-646, XP002167638 Munich, Germany
- ASTHANA A ET AL: "An indoor wireless system for personalized shopping assistance" PROCEEDINGS, WORKSHOP ON MOBILE COMPUTING SYSTEMS AND APPLICATIONS, IEEE COMPUTER SOCIETY PRESS, LOS ALAMITOS, CA, US, 8. Dezember 1994 (1994-12-08), Seiten 69-74, XP002170013
- "Specification of the Bluetooth System;Wireless connections made easy; Core; v1.0B" BLUETOOTH SPECIFICATION VERSION, XX, XX, Bd. 1, 1. Dezember 1999 (1999-12-01), Seiten 495-516, XP002159412

## Beschreibung

Die vorliegende Erfindung betrifft ein Verfahren zum Übertragen von Informationen zu einem von einer ersten Datenverarbeitungseinrichtung, insbesondere einer mobilen Datenverarbeitungseinrichtung, gebildeten Client, bei dem in einem Übertragungsschritt zum Übertragen in Bezug zu wenigstens einem ersten Objekt stehender erster Informationen eine Verbindung zwischen der ersten Datenverarbeitungseinrichtung als Client und einer Zentraleinrichtung als Server hergestellt wird. Weiterhin betrifft sie ein System zum Übertragen von Informationen zu einer ersten Datenverarbeitungseinrichtung, insbesondere zur Durchführung des erfindungsgemäßen Verfahrens, gemäß dem Oberbegriff des Anspruchs 19. Ebenso betrifft sie eine Vorrichtung sowie eine Datenverarbeitungseinrichtung zur Verwendung in einem solchen System, sowie eine Zentraleinrichtung für ein solches System.

Es sind gattungsgemäße Verfahren bzw. Systeme bekannt, bei denen ein Server als Zentraleinrichtung kontinuierlich über einen entsprechenden Kommunikationskanal Informationen über ein oder mehrere Objekten in seiner unmittelbaren Umgebung, beispielsweise einen Messestand oder dergleichen, aussendet.

Diese Informationen werden dann von einer empfangsbereiten mobilen Datenverarbeitungseinrichtung als Client, beispielsweise einem so genannten PDA (Personal Digital Assistant), empfangen und verarbeitet, sobald der Client in die Senderreichweite des Servers gelangt.

Diese bekannten Systeme haben jedoch den Nachteil, dass sie relativ aufwändig sind. So muss für jedes Objekt bzw. jede Umgebung, zu der Informationen an einen in der Nähe befindlichen Client ausgegeben werden sollen, stets ein leistungsfähiger Server vorhanden sein, der zudem kontinuierlich eine große Datenmenge aussenden muss.

Weiterhin ist ein Verfahren bzw. System im Zusammenhang mit einem so genannten elektronischen Stadt- und Reiseführer bekannt, bei dem in einem Übertragungsschritt erste Informationen von einem Server zu einem Client, beispielsweise einem Mobiltelefon oder einem PDA übertragen werden, sobald der PDA, beispielsweise über ein Mobilfunknetz, eine Verbindung zu dem Server hergestellt hat und eine entsprechende Anfrage an diesen abgesetzt hat. Der Nutzer des PDAs kann dabei Informationen zu seinem aktuellen Standort bzw. seiner aktuellen Umgebung abrufen. Er kann weiterhin Fahrplaninformationen öffentlicher Verkehrsmittel etc. abrufen.

Das bekannte System hat jedoch den Nachteil, dass der Nutzer stets nur auf seine explizite Anforderung mit entsprechender Information versorgt wird.

Aus US 5,938,721 ist ein ortsbasierter Personal Digital Assitant (PDA) bekannt, der in einem System so wirkt, dass er bei vorzugebenen räumlichen Bedingungen mit diesen räumlichen Bedingungen verknüpfte Aufgaben anzeigt.

Der vorliegenden Erfindung liegt daher die Aufgabe zu Grunde, eine gattungsgemäßes Verfahren bzw. System anzugeben, bei dem objektbezogene Informationen mit geringem Aufwand an in der Nähe des Objekts befindliche Datenverarbeitungseinrichtungen ausgegeben werden können.

Diese Aufgabe wird ausgehend von einem Verfahren gemäß dem Oberbegriff des Anspruchs 1 durch die im kennzeichnenden Teil des Anspruchs 1 angegebenen Merkmale gelöst. Sie wird weiterhin ausgehend von einem System gemäß dem Oberbegriff des Anspruchs 11 durch die im kennzeichnenden Teil des Anspruchs 11 angegebenen Merkmale gelöst, sowie durch eine Vorrichtung nach Anspruch 22.

Die Erfindung schließt die technische Lehre ein, dass man ein besonders einfach zu realisierendes gattungsgemäßes Verfahren erhält, wenn das erste Objekt von der Zentraleinrichtung entfernt ist und der Übertragungsschritt ausgelöst vom Erreichen einer vorgebbaren räumlichen Beziehung zwischen der ersten Datenverarbeitungseinrichtung und dem ersten Objekt erfolgt. Hierdurch ist es nicht erforderlich, dass in der Nähe eines jeden ersten Objekts eine entsprechende Zentraleinrichtung, beispielsweise ein entsprechender Server, aufgestellt ist, die zudem noch ständig Daten aussenden müsste. Vielmehr genügt es gemäß der Erfindung, das Erreichen einer vorgebbaren räumlichen Beziehung zwischen dem ersten Objekt und der ersten Datenverarbeitungseinrichtung zu erfassen und erst dann die entsprechenden ersten Informationen bezüglich dieses ersten Objekts von der Zentraleinrichtung zu ersten Datenverarbeitungseinrichtung zu senden.

Hierdurch ist es weiterhin möglich, eine einzelne Zentraleinrichtung, z. B. einen einzelnen Server, für eine Vielzahl von Objekten vorzusehen, die nicht nur weit entfernt von der Zentraleinrichtung sondern auch untereinander weit voneinander entfernt sein können.

Bei dem ersten Objekt kann es sich um einen beweglichen oder unbeweglichen Gegenstand, einen Ort oder aber auch um eine Person oder eine Gruppe von Personen handeln, zu dem bzw. der die ersten Informationen Bezug haben. Es kann sich jedoch auch um ein virtuelles Objekt handeln, das durch eine entsprechende Ortsinformation an einem bestimmten Ort lokalisiert ist. So ist es beispielsweise möglich, an einen bestimmten Ort erste Informationen bezüglich eines ersten Objekts zu knüpfen, das tatsächlich an diesem Ort nicht vorhanden ist. Mit dem erfindungsgemäßen Verfahren ist es somit in vorteilhafter Weise möglich, erste Informationen an beliebigen Orten, Gegenständen oder Personen zu "fixieren" und sie für einen Nutzer einer entsprechenden ersten Datenverarbeitungseinrichtung, beispielsweise eines entsprechenden Clients, zugänglich zu machen, sobald er sich in der Nähe dieses Orts, Gegenstands oder dieser Person bzw. Personen befindet.

Die Verbindung zwischen der ersten Datenverarbeitungseinrichtung (Client) und der Zentraleinrichtung (Server) erfolgt bevorzugt zumindest abschnittsweise drahtlos über einen entsprechenden Mobilfunkstandard, wie beispielsweise IEEE 802.11, GSM oder UMTS. Vorzugsweise erfolgt die Verbindung zwischen der ersten Datenverarbeitungseinrichtung und der Zentraleinrichtung auch zumindest teilweise über ein Datennetz, beispielsweise das Internet. So kann beispielsweise die mobile Datenverarbeitungseinrichtung den Zugangsserver eines entsprechenden Internet-Providers anwählen und die Datenverarbeitungseinrichtung dann über das Datennetz die Verbindung zur Zentraleinrichtung herstellen.

Zum Auslösen der Übertragung ist eine Information über die räumliche Beziehung zwischen der ersten Datenverarbeitungseinrichtung und dem ersten Objekt erforderlich. Die Information über die relative Position zwischen der ersten Datenverarbeitungseinrichtungen und dem ersten Objekt kann unmittelbar erzeugt werden. Sie kann aber beispielsweise auch aus einem Vergleich der absoluten Positionen der Datenverarbeitungseinrichtung und des ersten Objekts ermittelt werden. Der Begriff absolute Position ist hierbei so zu verstehen, dass es sich um eine Position in einem festen Bezugssystem, beispielsweise dem üblicherweise verwendeten Erd-Koordinatensystem mit Längen- und Breitengraden handelt.

Handelt es sich beispielsweise bei dem ersten Objekt um ein ortsfestes Objekt und bei der ersten Datenverarbeitungseinrichtung um eine mobile Einrichtung, so genügt es die aktuelle absolute Position des ersten Objekts in der Zentraleinheit verfügbar zu halten, beispielsweise in einem entsprechenden Speicher, und eine entsprechende Information über die absolute Position der ersten Datenverarbeitungseinrichtung an die Zentraleinheit zu senden, in der die beiden Positionsinformationen dann verglichen werden.

Ebenso kann es sich aber bei dem ersten Objekt um einen mobiles Objekt und bei der ersten Datenverarbeitungseinrichtung um eine ortsfeste Einrichtung handeln. Dann kann umgekehrt die aktuelle absolute Position der ersten Datenverarbeitungseinrichtung in einem entsprechenden Speicher in der Zentraleinheit verfügbar gehalten werden und es wird eine entsprechende Informationen über die absolute Position des ersten Objekts an die Zentraleinheit gesendet.

Ebenso ist es möglich, dass sowohl das erste Objekt als auch die mobile Datenverarbeitungseinrichtung mobil sind. Dann können die absolute Position des ersten Objekts und die absolute Position der ersten Datenverarbeitungseinrichtung eine Zentraleinheit gesendet und in dieser verglichen werden.

Die absolute Position des ersten Objekts bzw. der ersten Datenverarbeitungseinrichtung kann dabei in bekannter Weise mit Hilfe von GPS (Global Positioning System) oder einem zellularen Mobilfunknetz ermittelt werden.

Es versteht sich jedoch, dass es zum Auslösen der Übertragung der ersten Informationen, wie oben erwähnt, auch genügen kann, wenn nicht die aktuellen absoluten Positionen des ersten Objekts und der ersten Datenverarbeitungseinrichtung zur Verfügung stehen, sondern lediglich eine Information über deren relative Position zueinander verfügbar ist.

Die Erfindung kann in sämtlichen oben genannten Konstellationen vorteilhaft genutzt werden. Vorzugsweise wird die vorliegende Erfindung in einer Konstellation verwendet, bei der es sich zumindest bei der ersten Datenverarbeitungseinrichtung um eine mobile Einrichtung, also einen mobilen Client handelt. Hierbei wird dann in einem Auslöseschritt zum Auslösen des Übertragungsschritts eine erste Ortsinformation bezüglich der ersten Datenverarbeitungseinrichtung an die Zentraleinrichtung gesandt. Weiter vorzugsweise wird dann die erste Ortsinformation von der ersten Datenverarbeitungseinrichtung an die Zentraleinrichtung gesandt, da sich dies infolge der ohnehin erforderlichen Kommunikationsverbindung zwischen der Zentraleinrichtung und der ersten Datenverarbeitungseinrichtungen besonders einfach realisieren lässt.

Bei der ersten Ortsinformation kann es sich, wie erwähnt, um eine Information über die absolute Position der ersten Datenverarbeitungseinrichtung handeln. Vorzugsweise enthält die erste Ortsinformation aber schon eine Information über die räumliche Beziehung zwischen der ersten Datenverarbeitungseinrichtung und dem ersten Objekt, um einen entsprechenden Vergleich zwischen den absoluten Positionen des ersten Objekts und der ersten Datenverarbeitungseinrichtung überflüssig zu machen.

Die erste Ortsinformation kann, wenn es sich beispielsweise um eine Information bezüglich der absoluten Position der ersten Datenverarbeitungseinrichtung handelt, kontinuierlich bzw. in bestimmten Zeitabständen an die Zentraleinheit gesandt werden. Bei bevorzugten Varianten des erfindungsgemäßen Verfahrens erfolgt das Übersenden der ersten Ortsinformation ausgelöst vom Erreichen der vorgebbaren räumlichen Beziehung zwischen der ersten Datenverarbeitungseinrichtung und dem ersten Objekt. Hierdurch erübrigt es sich in vorteilhafter Weise, ständig eine erste Ortsinformation bezüglich der ersten Datenverarbeitungseinrichtung an die Zentraleinheit zu senden.

Bei bevorzugten Ausgestaltungen des erfindungsgemäßen Verfahrens erfolgt das Übersenden der ersten Informationen ausgelöst von einem an die Zentraleinrichtung gesandten ersten Auslösesignal, welches bei Erreichen der vorgebbaren Beziehung zwischen der ersten Datenverarbeitungseinrichtung und dem ersten Objekt erzeugt und an die Zentraleinrichtung gesandt wird. Bei dem Auslösesignal kann es sich um ein einfaches binäres Signal handeln, welches das Übersenden der ersten Informationen auslöst. Sind mehrere erste Objekte vorhanden, so enthält das Auslösesignal bevorzugt zumindest eine dem jeweiligen ersten Objekt entsprechende Kennung, die das Objekt und damit die zu sendenden ersten Informationen identifiziert. Alternativ kann diese jeweilige Kennung auch zusätzlich zu dem Auslösesignal gesandt werden.

Weiterhin kann das Auslösesignal eine Kennung enthalten, welche die mobile Datenverarbeitungseinrichtung identifiziert. Alternativ kann auch hier diese Kennung auch zusätzlich zu dem Auslösesignal gesandt werden. Hierdurch ist es möglich, die Verbindung zwischen der ersten Datenverarbeitungseinrichtung und der Zentraleinrichtung zum Übertragen der ersten Informationen erst zu einem späteren Zeitpunkt aufzubauen. Hierdurch ist es beispielsweise auch möglich, dass das erste Auslösesignal von einer von der ersten Datenverarbeitungseinrichtung getrennten Einrichtung an die Zentraleinrichtung gesandt wird. Bevorzugt wird das erste Auslösesignal von der ersten Datenverarbeitungseinrichtung erzeugt und an die Zentraleinrichtung gesandt wird, da sich dann ein besonders einfaches und kompakte Systeme gibt.

Das Auslösesignal kann weiterhin in der ersten Ortsinformation enthalten sein oder von dieser gebildet sein.

Bei bevorzugten Ausführungen des erfindungsgemäßen Verfahrens wird das erste Auslösesignal beim oder nach dem Herstellen einer uni- oder bidirektionellen Kommunikationsverbindung zwischen einer der ersten Datenverarbeitungseinrichtung zugeordneten ersten Sender- und/oder Empfängereinheit und einer dem ersten Objekt räumlich zugeordneten zweiten Sender- und/oder Empfängereinheit erzeugt. Hierdurch ist es in einfacher Weise möglich, eine erste Ortsinformation zu erhalten, die das Erreichen der vorgebbaren räumlichen Beziehung zwischen dem ersten Objekt und der ersten Datenverarbeitungseinrichtung anzeigt.

Die Reichweite und/oder die Empfindlichkeit der betreffenden Sender- und/oder Empfängereinheit bestimmt dabei die räumliche Beziehung, sprich den Abstand, zwischen dem ersten Objekt und der ersten Datenverarbeitungseinrichtung, die erreicht werden muss, um das Auslösesignal zu erzeugen. Die Reichweite kann aber auch dadurch eingeschränkt bzw. vorgegeben werde, dass der betreffende Sender von einer entsprechenden Abschirmung im gewünschten Abstand umgeben ist. So kann beispielsweise eine Sender- und/oder Empfängereinheit in einem Raum angeordnet sein, der dann die Reichweite begrenzt.

Vorzugsweise ist die zweite Sender- und/oder Empfängereinheit in einer zweiten Datenverarbeitungseinrichtung integriert. Diese kann ebenfalls eine mobile Datenverarbeitungseinrichtung sein. So ist es möglich, dass es sich bei dem ersten Objekt um eine Person handelt, die eine entsprechende zweite Datenverarbeitungseinrichtung mit sich trägt. Bei den ersten Informationen kann es sich dann folglich auch um personenbezogene Informationen handeln.

Die Kommunikationsverbindung kann dabei uni- oder bidirektionell sein. So kann es beispielsweise ausreichen, dass ein dem ersten Objekt zugeordneter Sender mit einer entsprechenden Senderreichweite vorgesehen ist, der kontinuierlich sendet, und die mobile Datenverarbeitungseinrichtung eine entsprechende Empfängereinheit aufweist. Ebenso kann der umgekehrte Fall realisiert sein. Weiterhin kann eine bidirektionelle Kommunikation zwischen jeweils einer dem ersten Objekt und der ersten Datenverarbeitungseinrichtung zugeordneten Sender- und Empfängereinheit erfolgen. Für die Kommunikationsverbindung können bekannte Sender bzw. Empfangseinrichtungen verwendet werden, die nach bekannten Verfahren arbeiten, wie beispielsweise IrDA oder Bluetooth. So ist es beispielsweise möglich, als dem ersten Objekt zugeordnete Sendereinrichtung ein so genanntes Infrarot-Beacon zu verwenden, welches eine bestimmte Kennung aussendet.

Es versteht sich jedoch, dass bei anderen Varianten des erfindungsgemäßen Verfahrens auch nur die mobile Datenverarbeitungseinrichtung mit einer entsprechenden Sender- und Empfängereinheit versehen sein kann, mit der dann ein dem ersten Objekt zugeordnetes passives Element abgetastet wird. So kann die mobile Datenverarbeitungseinrichtung beispielsweise mit einem entsprechenden Scanner versehen seien, der einen dem ersten Objekt zugeordneten Strich-Code oder dergleichen lesen kann. Umgekehrt kann auch dem ersten Objekt eine entsprechende Sender- und Empfängereinheit zugeordnet sein und die mobile Datenverarbeitungseinrichtung ein entsprechendes passives Element umfassen.

Bei bevorzugten Ausführungen des erfindungsgemäßen Verfahrens sendet die mobile Datenverarbeitungseinrichtung eine erste Kennungsinformation an die Zentraleinrichtung und es erfolgt vor dem Übertragen der ersten Informationen an die mobile Datenverarbeitungseinrichtung ein Autorisierungsschritt, in dem die erste Kennungsinformation mit einer den ersten Informationen bezüglich des jeweiligen ersten Objekts zugeordneten Autorisierungsinformation verglichen wird und in Abhängigkeit von der Erfüllung eines Vergleichskriteriums die Übertragung der ersten Informationen an die mobile Datenverarbeitungseinrichtung freigegeben wird. Hierdurch ist es in einfacher Weise möglich, den Zugang zu den ersten Informationen in einem bestimmten Kreis von Personen vorzubehalten. Dabei kann die Autorisierungsinformation in den ersten Informationen enthalten oder in einem Datenpaket mit ihnen verknüpft sein, so dass die Zugangsberechtigung einfach über eine entsprechende Gestaltung bzw. Veränderung der ersten Informationen bzw. dieses Datenpakets festgelegt bzw. modifiziert werden kann.

Es versteht sich jedoch, dass bei anderen Varianten des erfindungsgemäßen Verfahrens der Autorisierungsschritt auch in der ersten Datenverarbeitungseinrichtung vonstatten gehen kann, wenn diese hierzu entsprechend ausgebildet ist. Es muss dann lediglich auch die entsprechende Autorisierungsinformation in der ersten Datenverarbeitungseinrichtung zur Verfügung stehen.

Gemäß der vorliegenden Erfindung erfolgt vor dem Übertragen der ersten Informationen an die mobile Datenverarbeitungseinrichtung zusätzlich oder alternativ zum Autorisierungsschritt ein Überprüfungsschritt, in dem die Erfüllung wenigstens eines den ersten Informationen bezüglich des jeweiligen ersten Objekts zugeordneten zeitlichen Vergleichskriteriums überprüft wird. So kann ein Zeitfenster festgelegt sein, innerhalb dessen die ersten Informationen ausgegeben werden. Zusätzlich kann es sich jedoch auch um beliebige andere Kriterien handeln. So kann beispielsweise ein bestimmter Temperaturbereich vorgesehen sein, innerhalb dessen die Temperatur am Ort des ersten Objekts liegen muss. Ebenso können im Zusammenhang mit der Überwachung von Patienten bestimmte physiologische Parameter, beispielsweise die Herzrate etc., als Vergleichsparameter herangezogen werden. Überhaupt können im Zusammenhang mit Überwachungsaufgaben beliebige Parameter als Vergleichparameter herangezogen werden.

Es ist lediglich erforderlich, dass dann eine entsprechende Einrichtung zur Erfassung des tatsächlich vorherrschenden Werts des Vergleichsparameters vorgesehen ist, der dann auf die Erfüllung des entsprechenden zweiten Vergleichskriteriums überprüft wird. So ist es beispielsweise denkbar, dass im Pflanzkübel einer das erste Objekt bildenden Zimmerpflanze ein Feuchtigkeitssensor vorgesehen ist, dessen Messwert mit einem bestimmten Wertebereich verglichen wird und bei Unterschreiten einer vorgegebenen Mindestfeuchtigkeit erste Informationen ausgegeben werden, die einen Hinweis dahingehend enthalten, dass die betreffende Pflanze gegossen werden muss.

Auch hier versteht sich wiederum, dass der Überprüfungsschritt sowohl in der ersten Datenverarbeitungseinrichtung als auch in der Zentraleinrichtung vorgenommen werden kann, wenn diese hierzu entsprechend ausgebildet sind.

Bei weiteren vorteilhaften Varianten des erfindungsgemäßen Verfahrens werden die ersten Informationen in Abhängigkeit vom Bestehen einer vorgebbaren räumlichen Beziehung zwischen der ersten Datenverarbeitungseinrichtung und dem ersten Objekt in der ersten Datenverarbeitungseinrichtung verfügbar gehalten. Hierdurch ist es in einfacher Weise möglich, die Verfügbarkeit der ersten Informationen in der ersten Datenverarbeitungseinrichtung an eine tatsächlich bestehende räumliche Beziehung zwischen dem ersten Objekt und der ersten Datenverarbeitungseinrichtung zu koppeln. Sobald sich die mobile Datenverarbeitungseinrichtung und das erste Objekt beispielsweise über einen bestimmten Abstand hinaus voneinander entfernen, werden die ersten Informationen gelöscht oder in anderer Weise unverfügbar gemacht.

Bei der vorgebbaren räumlichen Beziehung kann es sich um dieselbe räumliche Beziehung handeln, die erfüllt sein muss, um die Übertragung der ersten Informationen auszulösen. Es kann aber auch eine andere vorgebbare räumliche Beziehung vorgesehen sein. So können die ersten Informationen beispielsweise auch noch in einem Abstand von ersten Objekt verfügbar sein, bei dem die Übertragung der erste Informationen noch nicht ausgelöst würde.

Alternativ oder zusätzlich können die ersten Informationen auch nur für einen vorgebbaren Zeitraum verfügbar gehalten werden. Bei jeder dieser Varianten reduziert sich in vorteilhafter Weise die in der ersten Datenverarbeitungseinrichtung verfügbar zu haltende Information. Es kann jedoch selbstverständlich vorgesehen sein, dass der Nutzer durch einen entsprechenden Befehl oder dergleichen für ihn wichtige Informationen unter Umgehung dieser Selektion dauerhaft in der ersten Datenverarbeitungseinrichtung speichern kann.

Es versteht sich jedoch, dass auch in diesem Zusammenhang die Verfügbarhaltung von der Erfüllung anderer oder weiterer zweiter Vergleichskriterien im oben genannten Sinne abhängen kann.

Die durch die erste Information beanspruchte Datenmenge, welche an die mobile Datenverarbeitungseinrichtung gesandt wird, wird bevorzugt auf einem möglichst geringem Maß gehalten und es ist bevorzugt vorgesehen, dem Nutzer der ersten Datenverarbeitungseinrichtung die Möglichkeit zu geben, sich anhand der ersten Informationen einen Überblick zu verschaffen, ob er an weiteren Informationen zu dem ersten Objekt interessiert ist.

Die ersten Informationen enthalten weiterhin bevorzugt eine Abrufinformation, mittels derer diese weiteren Informationen zu dem ersten Objekt abgerufen werden können. Bei besonders vorteilhaften Varianten des erfindungsgemäßen Verfahrens enthalten die ersten Informationen hierzu einen Link zu einer Internet-Seite. Die Verbindung zum Internet kann dabei über die Zentraleinrichtung oder einen anderen Server hergestellt werden.

Bei bevorzugten Weiterbildungen des erfindungsgemäßen Verfahrens ruft die Zentraleinrichtung die ersten Informationen über ein Datennetz, insbesondere das Internet, aus einem ersten Informationsspeicher. Dies hat den Vorteil, dass die erste Informationen generiert bzw. verändert werden können, ohne dass ein Zugriff auf die Zentraleinrichtung oder mit ihr verbundene Speicher notwendig wäre.

Besonders vorteilhaft lässt sich das erfindungsgemäße Verfahren einsetzen, wenn die mobile Datenverarbeitungseinrichtung eine mobile Datenverarbeitungseinrichtung, insbesondere ein Mobiltelefon, ein PDA, ein Notebook oder Sub-Notebook ist.

Bei den ersten Informationen kann es sich um beliebige Daten handeln. Vorzugsweise handelt es sich um Daten, die auf einer Anzeigeeinrichtung der ersten Datenverarbeitungseinrichtung, beispielsweise einem Display oder dergleichen, dargestellt werden.

Weitere günstige Varianten des erfindungsgemäßen Verfahrens zeichnen sich dadurch aus, dass die ersten Informationen ein durch die mobile Datenverarbeitungseinrichtung ausführbares Programm enthalten. Diese Variante kann insbesondere dann in vorteilhafter Weise eingesetzt werden, wenn es sich bei der ersten Datenverarbeitungseinrichtung um eine ortsfeste Einrichtung handelt, bei der dann in Abhängigkeit von der Annäherung eines ersten Objekts ein bestimmter Programmablauf initiiert werden kann. So kann das Verfahren dann beispielsweise im Zusammenhang mit der oben genannten Autorisierung als elektronischer Schlüssel verwendet werden, indem durch die Annäherung des ersten Objekts gesteuert durch die mobile Datenverarbeitungseinrichtung ein bestimmter Zugang, beispielsweise eine anderweitig nicht zu öffnende Tür oder dergleichen, freigegeben wird. Hierbei kann auch vorgesehen sein, dass das erste Objekt selbst eine mobile Datenverarbeitungseinrichtung ist oder ihm zumindest eine mobile Datenverarbeitungseinrichtung zugeordnet ist, über die dann entsprechende Eingabewerte, beispielsweise ein Zugangscode oder dergleichen, für das ausführbare Programm eingegeben werden können und müssen.

Bei besonders vorteilhaften Varianten der Erfindung ist vorgesehen, dass die ersten Informationen mittels der ersten Datenverarbeitungseinrichtung editiert, d. h. erzeugt und verändert werden, und in einem ersten Informationsspeicher abgelegt werden, aus dem sie später zum Übersenden an dieselbe oder eine andere mobile Datenverarbeitungseinrichtung von der Zentraleinrichtung abgerufen werden. Der Nutzer der ersten Datenverarbeitungseinrichtung muss bei bevorzugten Varianten zum Editieren der ersten Informationen eine entsprechende Autorisierung besitzen. Er muß beispielsweise einen entsprechenden Zugangs-Code oder dergleichen eingeben. Der Zugangs-Code kann dabei zum Vergleich bei der Autorisierung in den ersten Informationen enthalten sein. Ebenso kann die Zugangsberechtigung aber auch an die mobile Datenverarbeitungseinrichtung gekoppelt sein. So kann sie beispielsweise in einem entsprechenden Speicher der ersten Datenverarbeitungseinrichtung abgelegt sein.

Die vorliegende Erfindung betrifft weiterhin ein System zum Übertragen von Informationen zu einer ersten Datenverarbeitungseinrichtung, insbesondere einer mobilen Datenverarbeitungseinrichtung. Mit dem erfindungsgemäßen System läßt sich insbesondere das oben beschriebene erfindungsgemäße Verfahren in vorteilhafter Weise durchführen. Es ermöglicht die Durchführung sämtlicher oben beschriebener Verfahrensvarianten und bietet in gleicher Weise deren Vorteile.

Das erfindungsgemäße System umfasst wenigstens eine Zentraleinrichtung und wenigstens eine mobile Datenverarbeitungseinrichtung, die zum Übertragen in Bezug zu wenigstens einem ersten Objekt stehender erster Informationen über eine Verbindung zwischen der ersten Datenverarbeitungseinrichtung und einer Zentraleinrichtung jeweils eine Kommunikationseinrichtung aufweisen. Erfindungsgemäß ist das erste Objekt dabei von der Zentraleinrichtung entfernt und es sind weiterhin Auslösemittel vorgesehen, die zum Auslösen der Übertragung der ersten Informationen von der Zentraleinrichtung zur ersten Datenverarbeitungseinrichtung bei Erreichen einer vorgebbaren räumlichen Beziehung zwischen der ersten Datenverarbeitungseinrichtung und dem ersten Objekt ausgebildet sind.

Bei einer bevorzugten Variante des erfindungsgemäßen Systems sind wenigstens erste Lokalisierungsmittel mit einer Lokalisierungseinheit zum Erzeugen einer ersten Ortsinformation bezüglich der ersten Datenverarbeitungseinrichtung vorgesehen, wobei die Lokalisierungsmittel zum Senden der ersten Ortsinformation an die Zentraleinrichtung ausgebildet sind.

Bei der Lokalisierungseinheit kann es sich um eine Einrichtung handeln ,die sich in der Nähe des ersten Objekts befindet oder mit diesem verbunden ist. Sie kann mit entsprechenden Sensoreinrichtungen versehen sein, die erfassen, wenn eine mobile Datenverarbeitungseinrichtung in ihren Erfassungsbereich gelangt. Bevorzugt erkennt sie dabei, um welche mobile Datenverarbeitungseinrichtung es sich handelt. Dies geschieht vorzugsweise dadurch, dass die mobile Datenverarbeitungseinrichtung über entsprechende Mittel eine individuelle Identifikationskennung aussendet. Stehen die Lokalisierungseinheit und das erste Objekt in einer festen räumlichen Beziehung zueinander oder sind sie nur in einem begrenzten Bereich relativ zueinander beweglich, kann es sich bei der ersten Ortsinformation eine relative Ortsinformation handeln, die im einfachsten Fall lediglich den Inhalt hat, dass die vorgebbare räumliche Beziehung zwischen dem ersten Objekt und der mobile Datenverarbeitungseinrichtung nunmehr erfüllt ist.

Vorzugsweise sind die ersten Lokalisierungsmittel der ersten Datenverarbeitungseinrichtung zugeordnet, insbesondere in diese integriert. Hierdurch ergibt sich ein besonders einfacher Aufbau und es kann zum Senden zudem die ohnehin vorhandene Kommunikationseinrichtung genutzt werden. Bei der Lokalisierungseinheit kann es sich dann beispielsweise um ein GPS-Modul etc. handeln, mit dem eine absolute erste Ortsinformation für die mobile Datenverarbeitunaseinrichtung erzeugt wird.

Bevorzugt ist die Lokalisierungseinheit zum Erzeugen einer ersten Ortsinformation ausgebildet, die eine Information über die räumliche Beziehung zwischen der ersten Datenverarbeitungseinrichtung und dem ersten Objekt enthält, da dann ein weiterer Vergleich der absoluten Positionen des ersten Objekts und der ersten Datenverarbeitungseinrichtung entfallen kann.

Günstige Weiterbildungen der Erfindung zeichnen sich dadurch aus, dass zum Übersenden der ersten Ortsinformation ausgelöst vom Erreichen der vorgebbaren räumlichen Beziehung zwischen der ersten Datenverarbeitungseinrichtung und dem ersten Objekt die Lokalisierungsmittel zum Erfassen des Erreichens der vorgebbaren räumlichen Beziehung zwischen der ersten Datenverarbeitungseinrichtung und dem ersten Objekt ausgebildet sind.

Dies kann wieder durch entsprechende Sensoren oder dergleichen erfolgen. Dabei wird bevorzugt ein erstes Auslösesignal an die Zentraleinrichtung gesandt, welches das Übersenden der ersten Informationen auslöst, und die Lokalisierungseinheit ist bevorzugt zum Erzeugen einer ersten Ortsinformation ausgebildet, die das erste Auslösesignal enthält oder dieses bildet.

Besonders vorteilhaft läßt sich dies realisieren, wenn eine der ersten Datenverarbeitungseinrichtung zugeordnete erste Sender- und/oder Empfängereinheit und eine dem ersten Objekt räumlich zugeordnete zweite Sender- und/oder Empfängereinheit vorgesehen ist. Die Lokalisierungseinheit ist dann mit der ersten und zusätzlich oder alternativ mit der zweiten Sender- und/oder Empfängereinheit verbunden. Sie ist weiterhin zum Erzeugen und Senden des ersten Auslösesignals beim oder nach dem Herstellen einer uni- oder bidirektionellen Kommunikationsverbindung zwischen der ersten Sender- und/oder Empfängereinheit und der zweiten Sender- und/oder Empfängereinheit ausgebildet. Die Sender- und/oder Empfängereinheiten können dabei in der oben zum erfindungsgemäßen Verfahren geschilderten Weise ausgebildet sein.

Vorteilhafte Varianten des erfindungsgemäßen Systems zeichnen sich dadurch aus, dass die mobile Datenverarbeitungseinrichtung eine erste Speichereinrichtung zum Speichern einer ersten Kennungsinformation aufweist, die zum Senden der ersten Kennungsinformation an die Zentraleinrichtung mit der Kommunikationseinrichtung verbunden ist. Die Zentraleinrichtung umfasst bei diesen Varianten eine Autorisierungseinrichtung, die mit einer zweiten Speichereinrichtung zum Speichern einer den ersten Informationen bezüglich des jeweiligen ersten Objekts zugeordneten Autorisierungsinformation verbunden ist und zum Vergleichen der ersten Kennungsinformation mit der Autorisierungsinformation sowie zum Freigeben der Übertragung der ersten Informationen an die mobile Datenverarbeitungseinrichtung in Abhängigkeit von der Erfüllung eines Vergleichskriteriums ausgebildet ist. Hierdurch ist die oben beschriebene Zugangsautorisierung zu den ersten Informationen in einfacher Weise realisiert.

Weitere vorteilhafte Varianten des erfindungsgemäßen Systems zeichnen sich dadurch aus, dass eine Überprüfungseinrichtung zur Überprüfung der Erfüllung wenigstens eines den ersten Informationen bezüglich des jeweiligen ersten Objekts zugeordneten zweiten Vergleichskriteriums, insbesondere eines zeitlichen Vergleichskriteriums, und zum Freigeben der Übertragung der ersten Informationen an die mobile Datenverarbeitungseinrichtung in Abhängigkeit von der Erfüllung des zweiten Vergleichskriteriums vorgesehen ist, wie diese oben im Zusammenhang mit dem erfindungsgemäßen Verfahren beschrieben wurde.

Besonders vorteilhafte Varianten des erfindungsgemäßen Systems zeichnen sich dadurch aus, dass die mobile Datenverarbeitungseinrichtung eine Editiereinrichtung zum Erzeugen und Verändern der ersten Informationen und sowie eine Einrichtung zum Ablegen der ersten Informationen in einem ersten Informationsspeicher, aus dem sie von der Zentraleinrichtung abgerufen werden, aufweist. Hierzu ist vorzugsweise eine Ausgabeeinheit, beispielsweise ein Display, sowie eine Eingabeeinheit, beispielsweise eine Tastatur, vorgesehen. Es kann natürlich auch ein berührungsempfindliches Display oder dergleichen vorgesehen sein.

Die Auslösemittel, die Autorisierungseinrichtung und die Überprüfungseinrichtung können erfindungsgemäß in einer gemeinsamen Vorrichtung integriert sein. Diese kann sowohl von der Zentraleinrichtung als auch von der ersten Datenverarbeitungseinrichtung gebildeten sein. Die mobile Datenverarbeitungseinrichtung kann erfindungsgemäß weiterhin die oben beschriebenen Lokalisierungsmittel enthalten.

Eine Zentraleinrichtung für das vorbeschriebene System zum Übertragen von Informationen weist eine Verarbeitungseinheit zum Verarbeiten von in dem System zu übertragenden Informationen auf. In der für die Figurenbeschreibung gewählten Diktion besteht die Erfindung somit auch in einem Server mit einem für die Verarbeitung von WebTags ausgebildeten Prozessor. Dieser WebTag-Prozessor kann sowohl durch Hardware als auch durch Software realisiert sein.

Weitere bevorzugte Ausgestaltungen der vorliegenden Erfindung ergeben sich aus den Unteransprüchen sowie der nachstehenden Beschreibung bevorzugter Ausführungen unter Bezugnahme auf die beigefügten Zeichnungen. Es zeigen:
Figur 1 ein Blockdiagramm einer ersten bevorzugten Ausführungsform des erfindungsgemäßen Systems zur Durchführung des erfindungsgemäßen Verfahrens;
Figur 2 ein detailliertes Blockdiagramm einer bevorzugten Variante der Ausführung aus Figur 1;
Figur 3 eine schematische Datenbankstruktur zur Datenverwaltung bei der Ausführung aus Figur 1;
Figur 4 ein Blockdiagramm einer zweiten bevorzugten Ausführungsform des erfindungsgemäßen Systems zur Durchführung des erfindungsgemäßen Verfahrens;
Figur 5 ein Blockdiagramm einer dritten bevorzugten Ausführungsform des erfindungsgemäßen Systems zur Durchführung des erfindungsgemäßen Verfahrens.

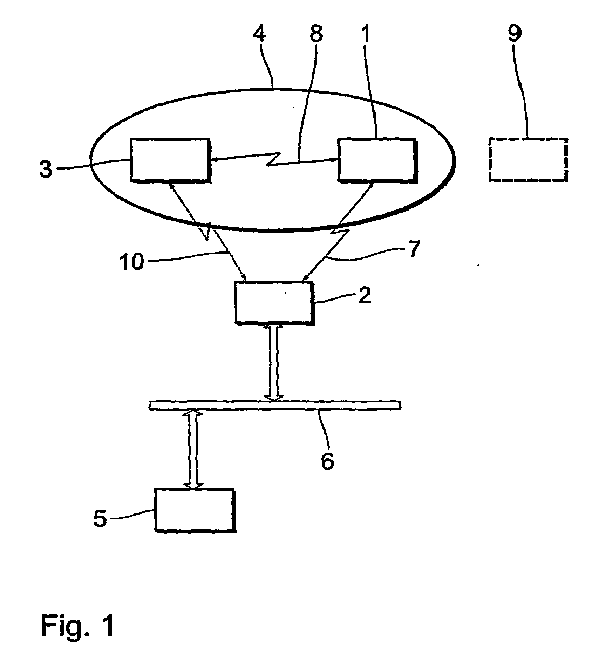

Figur 1 zeigt ein Blockdiagramm einer ersten Ausführungsform des erfindungsgemäßen Systems mit einem Client 1, der die mobile Datenverarbeitungseinrichtung bildet, einem Server 2, der die Zentraleinrichtung bildet, und einem ersten Objekt 3, das sich an einem von dem Server 2 entfernten Standort befindet.

Sobald der Client 1 eine vorgebbare räumliche Beziehung zu dem ersten Objekt 3 erreicht, wie dies durch die Kontur 4 angedeutet ist, werden von dem Server 2 erste Informationen bezüglich des ersten Objekts 3 an den Client 1 gesandt, sofern zusätzliche Kriterien erfüllt sind, auf die später noch eingegangen wird. Die ersten Informationen ruft der Server 2 dabei aus einem ersten Informationsspeicher 5 ab, mit dem er über ein Datennetz 6, beispielsweise das Internet, verbunden ist. Mit anderen Worten werden die ersten Informationen automatisch von dem Server 2 an den Client 1 gesandt, sobald dieser in die Nähe des ersten Objekts 3 gelangt und die genannten weiteren Kriterien erfüllt sind.

Bei den weiteren Kriterien handelt es sich zum einen um eine Zugangsberechtigung zu den ersten Informationen bezüglich des ersten Objekts 3. So ist vorgesehen, dass nur bestimmte Personen oder Personengruppen Zugang zu den ersten Informationen haben sollen. Hierzu muss der Nutzer des Clients 1 im gezeigten Beispiel eine ihm zugeordnete Identifikationskennung in den Client 1 eingeben, welche dann beide Überprüfung der Zugangsberechtigung zu den ersten Informationen mit vorgegebenen Autorisierungsinformationen verglichen wird. Es versteht sich jedoch, dass bei anderen Varianten die Zugangsberechtigung nicht an der Nutzer des Clients sondern allein an den Client gebunden sein kann. Die erste Kennungsinformation kann dabei fest mit dem Client 1 verknüpft sein, beispielsweise in diesem gespeichert sein.

Ein weiteres Kriterium ist die zeitliche Gültigkeit der ersten Informationen. So ist ein Zeitfenster festgelegt, innerhalb dessen die erste Informationen Gültigkeit haben, d. h. überhaupt nur angezeigt werden. Es versteht sich, dass bei anderen Varianten auch nur ein Startzeitpunkt bzw. Endzeitpunkt für die Ausgabe der ersten Informationen festgelegt sein kann.

Die ersten Informationen enthalten einen Link zu einer entsprechenden Web-Seite, die weitere Informationen bezüglich des ersten Objekts 3 zur Verfügung stellt. In der Regel sind die ersten Informationen so gestaltet, dass der Nutzer des Clients 1 anhand dieser ersten Informationen entscheiden kann, ob er noch weitere Informationen bezüglich des ersten Objekts 3 unter Verwendung des Links abrufen will. Ist dies der Fall, erfolgt die Verbindung zur betreffenden Webpage über den Server 2. Es versteht sich jedoch, dass diese Verbindung auch über einen anderen Server hergestellt werden kann. Weiterhin versteht es sich, dass die ersten Informationen auch in einem gesonderten, mit dem Server unmittelbar verbundenen Informationsspeicher abgelegt sein können.

Bei dem Client 1 handelt es sich im gezeigten Beispiel um einen PDA mit einem entsprechenden berührungsempfindlichen Display, auf dem die ersten Informationen dargestellt werden und das als Eingabeeinheit verwendet werden kann, um die weiteren Informationen bezüglich des ersten Objekts 3 unter Verwendung des Links abzurufen. Befindet sich der Client 1 in der Nähe mehrerer erster Objekte 3, so wird beispielsweise auf dem Display eine Liste der zu den jeweiligen ersten Objekten 3 zugehörigen ersten Informationen dargestellt, welche dann gegebenenfalls eine Liste entsprechender Links bildet.

Sofern der Nutzer des Clients 1 eine entsprechende Autorisierung, beispielsweise einen Zugangscode, besitzt bzw. mit dem Client 1 eine entsprechende Autorisierung verknüpft ist, der Zugangscode also beispielsweise im Client 1 gespeichert ist, kann der Nutzer des Clients 1 den Inhalt der ersten Informationen und gegebenenfalls auch der weiteren Informationen einer zugehörigen Webpage unter Zuhilfenahme einer entsprechenden Editiereinrichtung editieren. Hierzu kann er sich beispielsweise des berührungsempfindliches Displays bedienen.

Das Auslösen des Übertragungsschritts, in dem die ersten Informationen über eine zumindest teilweise drahtlose Kommunikationsverbindung 7 vom Server 2 an den Client 1 gesandt werden, erfolgt sobald der Client 1 in die Umgebung 4 des ersten Objekts 3 gelangt. Zum Auslösen des Übertragungsschritts wird zunächst eine ebenfalls drahtlose Kommunikationsverbindung 8 zwischen den Client 1 und dem ersten Objekt 3 hergestellt. Befindet sich der Client 1 noch außerhalb der Umgebung 4, wie dies durch die Kontur 9 angedeutet ist, kommt keine solche Kommunikationsverbindung 8 zustande.

Das Zustandekommen der Kommunikationsverbindung 8 wird im Client 1 erfasst und bewirkt, dass der Client 1 eine erste Ortsinformation an den Server 2 sendet. Diese erste Ortsinformation enthält eine Information bezüglich der räumlichen Beziehung zwischen dem ersten Objekt 3 und dem Client 1. Im gezeigten Fall ist dies eine einfache binäre Information, die besagt, dass die vorgegebene räumliche Beziehung zwischen der ersten Datenverarbeitungseinrichtung 1 und dem ersten Objekt 3 erreicht ist, sowie eine Information, die das erste Objekt 3 anhand einer ihm zugeordneten Kennung identifiziert.

Die erste Ortsinformation bildet das Auslösesignal für die Übertragung der ersten Informationen. Vor dem Übertragen der ersten Informationen vom Server 2 an den Client 1 erfolgt jedoch, wie oben beschrieben, noch ein Autorisierungsschritt, in dem überprüft wird, ob der Nutzer des Clients 1 autorisiert ist, die ersten Informationen zu empfangen. Hierzu wird neben der ersten Ortsinformation eine erste Kennungsinformation vom Client 1 an den Server 2 gesandt. Diese erste Kennungsinformation wird im Server 2 mit einer Autorisierungsinformation verglichen. Weiterhin erfolgt ein Überprüfungsschritt, in dem anhand einer Gültigkeitsinformation überprüft wird, ob die aktuelle Zeit innerhalb des vorgegebenen Zeitfensters für die Gültigkeit der ersten Informationen liegt. Sind beide Vergleichskriterien erfüllt, so wird die Übertragung der ersten Informationen an den Client 1 freigegeben.

Die Autorisierungsinformation und die Gültigkeitsinformation sind im gezeigten Beispiel zusammen mit den ersten Informationen in einem Datenpaket enthalten. Es versteht sich, dass sie bei anderen Varianten jedoch auch in einem gesonderten, mit dem Server verbundenen oder von diesem umfassten Informationsspeicher abgelegt sein kann.

Wie in Figur 1 durch den gestrichelten Pfeil 10 angedeutet, kann bei anderen Varianten des erfindungsgemäßen Systems bzw. Verfahrens auch eine weitere Kommunikationsverbindung zwischen dem ersten Objekt und der Zentraleinrichtung aufgebaut werden, über die dann beispielsweise die erste Ortsinformation gesendet wird.

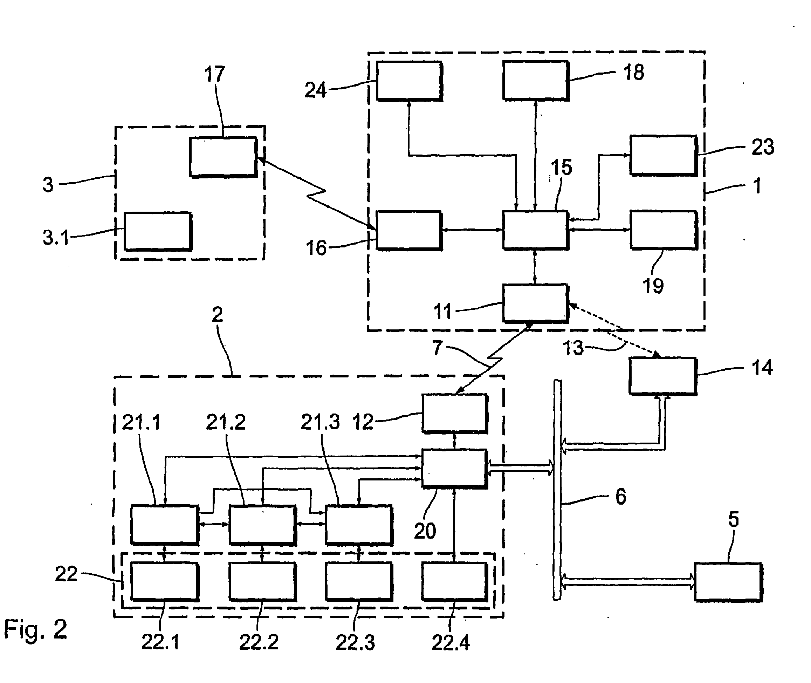

Bezug nehmend auf Figur 2 wird im Folgenden die Struktur des Systems aus Figur 1 näher dargelegt.

Der Client 1 weist eine Kommunikationseinrichtung 11 auf, über die er die Kommunikationsverbindung 7 mit einer entsprechenden Kommunikationseinrichtung 12 des Servers 2 aufbauen kann. Hierbei handelt es sich im gezeigten Beispiel zumindest abschnittsweise um eine zur Datenübertragung geeignete Mobilfunkverbindung, beispielsweise nach dem GSM-Standard.

Es versteht sich, dass die Kommunikationsverbindung 7 zwischen dem Client 1 und dem Server 2 zusätzlich oder alternativ auch zumindest teilweise über das Datennetz 6, also beispielsweise das Internet, erfolgen kann. So kann beispielsweise, wie dies durch den gestrichelten Pfeil 13 angedeutet ist, mittels der Kommunikationseinrichtung 11 der ersten Datenverarbeitungseinrichtung der Zugangsserver 14 eines entsprechenden Internet-Providers angewählt werden und dann über das Datennetz 6 die Verbindung zur Zentraleinrichtung 2 hergestellt werden.

Der Client 1 weist eine zentrale Verarbeitungseinheit 15 auf, die mit der Kommunikationseinrichtung 11 verbunden ist. Sie weist weiterhin eine Sender- und Empfängereinheit 16 auf, die ebenfalls mit der Verarbeitungseinheit 13 verbunden ist. Die Sender- und Empfängereinheit ist im gezeigten Beispiel als Infrarotschnittstelle 16 ausgebildet, die nach dem lrDA-Standard arbeitet. Es versteht sich jedoch, dass bei anderen Varianten auch nur ein entsprechender Empfänger vorgesehen sein kann.

Das erste Objekt 3 umfasst einen Gegenstand 3.1 und eine Empfängereinheit 17, die in einer festen räumlichen Beziehung zueinander stehen. So kann die Empfängereinheit 17 fest mit dem Gegenstand 3.1 verbunden sein. Bei dem Gegenstand 3.1 kann es sich beispielsweise um ein elektronisches Gerät handeln.

Die Empfängereinheit 17 ist im gezeigten Beispiel als Infrarot-Beacon, d. h. als einfacher Infrarotsender ausgebildet, der eine für das erste Objekt 3 individuelle Kennung aussendet. Der Infrarotsender 17 weist eine bestimmte Senderreichweite auf, welche die vorgebbare räumliche Beziehung zwischen dem ersten Objekt 3 und dem Client 1 bestimmt. Es versteht sich jedoch, dass diese vorgebbare räumliche Beziehung dadurch auf einen kleineren Umkreis des ersten Objekts beschränkt werden kann, dass eine entsprechende Abschirmung in einem bestimmten Abstand um das erste Objekt vorgesehen ist. So kann das erste Objekt beispielsweise in einem Raum aufgestellt sein, dessen Wände etc. eine größere Reichweite des Senders 17 verhindern.

Sobald der Client 1 mit seiner Infrarotschnittstelle 16 in die Reichweite des Infrarotsenders 17 gelangt, wird eine unidirektionelle Kommunikationsverbindung zwischen der Infrarotschnittstelle 16 und dem Infrarotsender 17 aufgebaut. Dies wird von einer Lokalisierungseinheit 18, die mit der Verarbeitungseinheit 15 verbunden ist, erfasst. Die Lokalisierungseinheit 18 erzeugt daraufhin die erste Ortsinformation. Diese wird anschließend über die Kommunikationseinrichtung 11 an den Server 2 gesendet.

Zusammen mit der ersten Ortsinformation, welche das Auslösesignal für den Übertragungsschritt darstellt, wird zum einen die individuelle Kennung des ersten Objekts 3 und zum anderen die erste Kennungsinformation bezüglich des Clients 1, die in einem mit der Verarbeitungseinheit 15 verbundenen Speicher 19 abgelegt ist, an den Server 2 gesandt.

Der Server 2 umfasst eine Verarbeitungseinheit 20, die mit der Kommunikationseinrichtung 12 verbunden ist. Weiterhin umfasst er eine mit der Verarbeitungseinheit 20 verbundene Identifizierungseinrichtung 21.1, die mit einem ersten Speicherbereich 22.1 des Speichers 22 verbunden ist. Die Verarbeitungseinheit 20 gibt die individuelle Kennung des ersten Objekts 3 an die Identifizierungseinrichtung 21.1 weiter. In dem ersten Speicherbereich 22.1 ist für eine Anzahl erster Objekte jeweils eine Liste mit dem betreffenden ersten Objekt 3 zugeordneten Speicheradressen abgelegt, unter denen die jeweiligen ersten Informationen zu dem ersten Objekt 3 sowie die diesen ersten Informationen zugeordnete Autorisierungsinformation und Gültigkeitsinformation abgelegt sind. Es versteht sich dabei, dass jedem ersten Objekt 3 eine Anzahl erster Informationen zugeordnet sein kann.

Weiterhin umfasst der Server 2 eine Autorisierungseinrichtung 21.2, die mit der Verarbeitungseinheit 20, der Identifizierungseinrichtung 21.1 und einem zweiten Speicherbereich 22.2 des Speichers 22 verbunden ist. Diese Autorisierungseinrichtung 21.2 vergleicht die von der Verarbeitungseinheit 20 an sie weitergegebene erste Kennungsinformation bezüglich des Clients 1 mit einer Autorisierungsinformation, die den ersten Informationen bezüglich des ersten Objekts 3 zugeordnet und in dem zweiten Speicherbereich 22.2 abgelegt ist. Der Zugriff der Autorisierungseinrichtung 21.2 auf den zweiten Speicherbereich 22.2 erfolgt in Abhängigkeit von der über die ldentifizierungseinrichtung 21.1 an die Autorisierungseinrichtung 21.2 weitergegebenen Speicheradressen.

Sofern ein Vergleichkriterium erfüllt ist, also beispielsweise die erste Kennungsinformation mit einer in der Autorisierungsinformation enthaltenen Kennungsinformation übereinstimmt, wird ein Freigabesignal von der Autorisierungseinrichtung 21.2 an die Verarbeitungseinheit 20 übergeben. Hierbei können den unterschiedlichen ersten Informationen bezüglich eines ersten Objekts 3 unterschiedliche Autorisierungsinformationen zugeordnet sein. So können bestimmte erste Informationen jedermann zugänglich sein, während andere ersten Informationen nur einem bestimmten Personenkreis ggf. sogar nur einer einzigen Person zugänglich sind.

Weiterhin umfasst der Server 2 eine Überprüfungseinrichtung 21.3, die mit der Verarbeitungseinheit 20, der Identifizierungseinrichtung 21.1 und einem dritten Speicherbereich 22.3 des Speichers 22 verbunden ist. Diese Überprüfungseinrichtung 21.3 vergleicht die aktuelle Zeit mit einer Gültigkeitsinformation, die den betreffenden ersten Informationen bezüglich des betreffenden ersten besten Objekts 3 zugeordnet ist, die in dem zweiten Speicherbereich 22.2 abgelegt ist. Der Zugriff der Autorisierungseinrichtung 21.2 auf den zweiten Speicherbereich 22.2 erfolgt dabei in Abhängigkeit von der über die Identifizierungseinrichtung 21.1 an die Überprüfungseinrichtung 21.3 weitergegebenen Speicheradressen.

Die Gültigkeitsinformation ist dabei ein Zeitfenster, innerhalb dessen die betreffenden ersten Informationen ausgegeben werden sollen. Sofern die aktuelle Zeit innerhalb dieses Zeitfensters liegt, also das Vergleichskriterium erfüllt ist, wird ein Freigabesignal von der Überprüfungseinrichtung 21.3 an die Verarbeitungseinheit 20 übergeben. Hierbei können den unterschiedlichen ersten Informationen bezüglich eines ersten Objekts 3 unterschiedliche Gültigkeitsinformationen zugeordnet sein. So können bestimmte erste Informationen zeitlich unbegrenzt zugänglich sein, während andere ersten Informationen nur für einen bestimmten Zeitraum zugänglich sind.

Die Autorisierungsinformation und die Gültigkeitsinformation sind in einem Datenpaket zusammen mit den ersten Informationen bezüglich des ersten Objekts 3 enthalten, das bei Eintreffen der ersten Ortsinformation zusammen mit der individuellen Kennung des ersten Objekts 3 im Server 2 von diesem über das Datennetz 6 aus dem ersten Informationsspeicher 5 abgerufen und an den entsprechenden Positionen in dem Speicher 22 abgelegt wird. Es versteht sich jedoch, dass dieses Datenpaket bei anderen Varianten von vornherein in dem Speicher 22 abgelegt sein kann.

Sofern bezüglich bestimmter ersten Informationen sowohl von der Autorisierungseinrichtung 21.2 als auch von der Überprüfungseinrichtung 21.3 ein Freigabesignal an die Verarbeitungseinheit 20 gelangt, erfolgt die Übertragung dieser ersten Informationen an den Client 1. Hierbei greift die Verarbeitungseinheit 20 auf einem mit ihr verbundenen vierten Speicherbereich 22.4 zu, in dem die entsprechenden ersten Informationen abgelegt sind. Der Zugriff der Verarbeitungseinheit 20 auf den vierten Speicherbereich 22.4 erfolgt in Abhängigkeit von der über die Identifizierungseinrichtung 21.1 an die Verarbeitungseinheit 20 weitergegebene Speicheradresse. Die ersten Informationen werden dann an den Client 1 gesandt und dort in einem mit der Verarbeitungseinheit 15 verbundenen Speicher 23 abgelegt.

Sobald die ersten Informationen in dem Speicher 23 abgelegt wurden, werden sie auf der von einem berührungsempfindlichen Display 24 gebildeten Ein- und Ausgabeeinheit des Clients 1 dargestellt.

Die Lokalisierungseinheit 18 ist dem gezeigten Beispiel so ausgebildet, dass sie das Entfernen der entsprechenden ersten Informationen aus dem Speicher 23 veranlasst, sobald die vorgegebene räumliche Beziehung zwischen dem ersten Objekt 3 und dem Client 1 nicht mehr besteht, d. h. sobald die Kommunikationsverbindung zwischen dem Infrarotsender 17 und der Infrarotschnittstelle 16 abreißt. Weiterhin ist die Verarbeitungseinheit 15 so ausgebildet, dass sie das Entfernen der ersten Informationen aus dem Speicher 23 veranlasst, sobald eine bestimmte Zeitdauer seit dem letzten Ablegen dieser ersten Informationen in dem Speicher 23 verstrichen ist.

Es versteht sich, dass bei anderen Varianten der Erfindung die Sender- unter/oder Empfängereinheiten auch so ausgebildet sein können, dass sie eine bidirektionellen Kommunikationsverbindung zwischen dem ersten Objekt und dem Client ermöglichen. Hierbei kann dann auch über diese Kommunikationsverbindung eine Überprüfung der Autorisierung erfolgen. So kann vorgesehen sein, dass der Client die erste Kennungsinformation zunächst an das erste Objekt sendet und dieses den Vergleich mit der zweiten Kennungsinformation durchführt. In Abhängigkeit von der Erfüllung eines Vergleichskriteriums sendet das erste Objekt dann entweder über dem Client oder direkt eine entsprechende Freigabeinformation an die Zentraleinrichtung.

Es versteht sich weiterhin, dass es sich bei anderen Varianten der Erfindung bei dem ersten Objekt auch um eine Person handeln kann, die dann eine entsprechende Sender- und/oder Empfängereinheit mit sich trägt. Diese kann dann beispielsweise in einer entsprechenden zweiten Datenverarbeitungseinrichtung integriert sein. Sie kann beispielsweise von der Infrarotschnittstelle eines PDA, eines Mobiltelefons oder dergleichen gebildet sein.

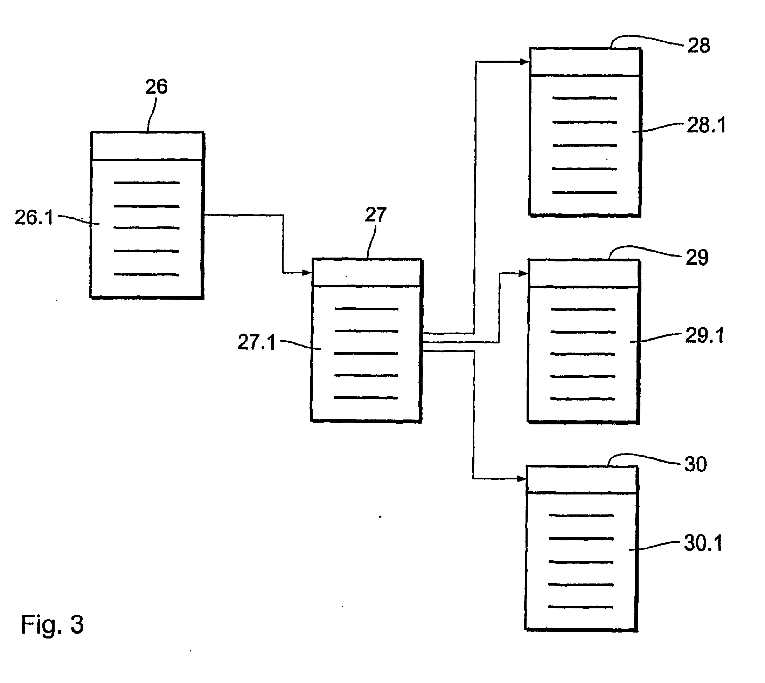

Die Verwaltung der ersten Informationen bezüglich der ersten Objekte kann durch eine Datenbank erfolgen. Figur 3 zeigt schematisch die Struktur einer solchen Datenbank, die im Zusammenhang mit dem System aus Figur 1 und 2 verwendet werden kann.

Die Datenbank beinhaltet eine erste Liste 26 der zu verwaltenden ersten Objekte. Die erste Liste 26 weist den einzelnen ersten Objekten zugeordnete Listenfelder 26.1 auf. Jedes Listenfeld 26.1 enthält einen Eintrag, der auf eine bestimmte zweite Liste 27 von Datenblöcken verweist, die dem jeweiligen ersten Objekt zugeordnet sind und im Folgenden als WebTags bezeichnet werden. Die zweite Liste 27 weist Listenfelder 27.1 auf, in denen Einträge bezüglich des jeweiligen WebTags abgelegt sind.

Jeder Eintrag in einem Listenfeld 27.1 verweist wiederum auf eine dritte Liste 28 der ersten Informationen, die dem jeweiligen WebTag zugeordnet sind. Die dritte Liste 28 weist hierzu Listenfelder 28.1 mit Einträgen auf, die den entsprechenden ersten Informationen entsprechen und beispielsweise Links zu entsprechenden Web-Seiten oder dergleichen enthalten.

Weiterhin verweist jeder Eintrag in einem Listenfeld 27.1 auf eine vierte Liste 29, welche die dem jeweiligen WebTag zugeordnete Autorisierungsinformation enthält. Hierzu enthalten die Listenfelder 29.1 der vierten Liste 29 Einträge, die den Kennungen der Clients bzw. Nutzer entsprechen, an welche die zugehörigen ersten Informationen aus der dritten Liste 28 ausgegeben werden sollen. Auf diese vierte Liste 29 wird während des Autorisierungsschritts zugegriffen. Es versteht sich, dass die Einträge in den Listenfeldern der vierten Liste bei anderen Varianten auch ganz oder teilweise Benutzergruppen entsprechen können und dann wiederum jeweils auf eine weitere Liste mit Einträgen verweisen, die den Kennungen der Client bzw. Nutzer entsprechen, an welche die zugehörigen ersten Informationen ausgegeben werden sollen.

Weiterhin verweist jeder Eintrag in einem Listenfeld 27.1 auf eine fünfte Liste 30, welche dem jeweiligen WebTag zugeordnete Kriterien für den Überprüfungsschritt enthält. Hierzu enthalten die Listenfelder 30.1 der fünften Liste 30 Einträge, die den Kriterien entsprechen, welche erfüllt sein müssen, um die zugehörigen ersten Informationen aus der Liste 28 auszugeben. Auf diese fünfte Liste 30 wird während des Überprüfungsschrittes zugegriffen. In dem zu den Figuren 1 und 2 beschriebenen Beispiel enthält die fünfte Liste 30 lediglich einen Eintrag, durch den ein Zeitfenster für die Ausgabe der ersten Informationen festgelegt ist. Es versteht sich jedoch, dass bei anderen Varianten eine Vielzahl solcher Einträge für unterschiedliche Kriterien vorgesehen sein kann.

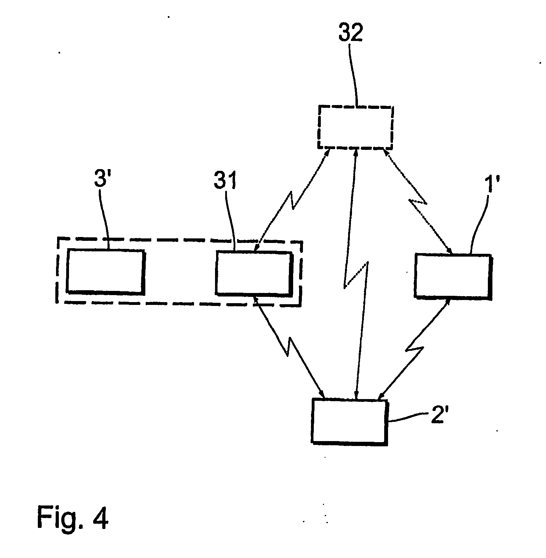

Figur 4 zeigt ein weiteres Ausführungsbeispiel des erfindungsgemäßen Systems mit einem Client 1', einem Server 2' und einem ersten Objekt 3', dem eine zweite Lokalisierungseinheit in einer festen räumlichen Beziehung zugeordnet ist. Diese Variante gleicht in ihrer grundsätzlichen Funktionalität der Variante aus Figur 1, so dass lediglich auf die Unterschiede eingegangen werden soll.

Der Unterschied besteht darin, dass sowohl der Client 1' als auch für die zweite Lokalisierungseinheit 31 eine Ortsinformation an den Server 2' senden, die eine Information über die absolute Position des Clients 1' bzw. des ersten Objekts 3' darstellt. Hierzu ist sowohl der Client 1' als auch die zweite Lokalisierungseinheit 31 mit einem GPS-Modul ausgerüstet.

Im Server 2' werden die beiden Ortsinformationen verglichen und bei Erfüllung eines vorgegebenen Vergleichskriteriums die Übertragung der ersten Informationen an den Client 1' ausgelöst. Hierbei erfolgt, wie schon zu dem Beispiel aus Figur 1 und 2 beschrieben, ein entsprechender Autorisierungsschritt und ein Überprüfungsschritt, um die Übertragung endgültig freizugeben. Der Aufbau des Servers 2> entspricht dabei dem Aufbau des Servers aus den Figuren 1 und 2, wobei die Identifizierungseinrichtung zusätzlich den Vergleich der Ortsinformationen durchführt und dabei auf einen weiteren Speicherbereich zugreift, in dem für die jeweiligen dem ersten Objekt zugeordneten ersten Informationen jeweils ein Vergleichskriterium, also beispielsweise ein Mindestabstand, abgelegt ist.

Bei einer alternativen Variante können, wie in Figur 3 durch die gestrichelten Konturen angedeutet ist, Lokalisierungsmittel 26 vorgesehen sein, die weder zu dem ersten Objekt 3' noch zum Client 1' eine feste räumliche Beziehung aufweisen, sondern lediglich erfassen, wenn sich sowohl das erste Objekt 3' als auch der Client 1' in einer vorgegebenen räumlichen Beziehung zueinander befinden. Die Lokalisierungsmittel 32 können dann eine entsprechende erste Ortsinformation an den Server 2' senden. Diese erste Ortsinformation enthält dann eine Information über die relative Position des Clients 1' zum ersten Objekt 3'.

Auch bei dieser alternativen Variante kann dann in der oben beschriebenen Weise entsprechend dem erfindungsgemäßen Verfahren weiterverfahren werden.

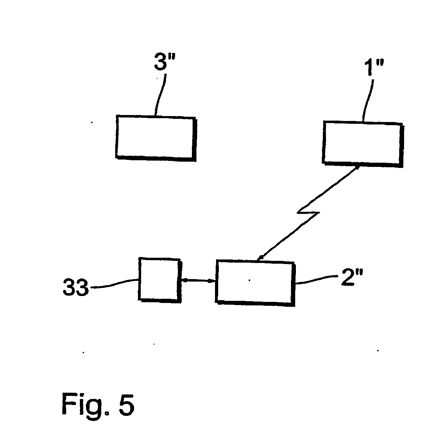

Figur 5 zeigt eine weitere Variante des erfindungsgemäßen Systems mit einem Client 1 ", einem Server 2" und einem ersten Objekt 3". Das System entspricht in seiner grundsätzlichen Funktionalität demjenigen aus Figur 1, so dass auch hier lediglich auf die Unterschiede eingegangen werden soll.

Der wesentliche Unterschied besteht darin, dass der Client 1" eine Ortsinformation an den Server 2" sendet, die eine Information über seine absolute Position enthält. Hierzu ist der Client 1" mit einem entsprechenden GPS-Modul ausgerüstet.

Zum Auslösen der Übertragung der ersten Informationen wird die vom Client 1" gesandte Ortsinformation mit einer Ortsinformation bezüglich des ersten Objekts 3" verglichen, die in einem Speicher 33 abgelegt ist, der mit dem Server 2" verbunden ist. Das Auslösen des Übertragungsschritts erfolgt hierbei, sobald dieser Vergleich ergibt, dass die vorgebbare räumliche Beziehung zwischen dem Client 1" und dem ersten Objekt 3" erreicht wurde. Wie schon bei den obigen Beispielen kann dann in der oben beschriebenen Weise gemäß dem erfindungsgemäßen Verfahren weiterverfahren werden.

Auch bei dieser Variante entspricht der Aufbau des Servers 2> dem Aufbau des Servers 2 aus den Figuren 1 und 2, wobei die Identifizierungseinrichtung zusätzlich den Vergleich der Ortsinformationen durchführt und dabei auf einen weiteren Speicherbereich zugreift, in dem für die jeweiligen dem ersten Objekt zugeordneten ersten Informationen jeweils ein Vergleichskriterium, also beispielsweise ein Mindestabstand, abgelegt ist.

Die eben beschriebene Variante eignet sich besonders in Verbindung mit ortsfesten ersten Objekten.

## Patentansprüche

1. Verfahren zum Übertragen von Informationen zu einer mobilen Datenverarbeitungseinrichtung, bei dem in einem Übertragungsschritt zum Übertragen in Bezug zu wenigstens einem Objekt (3; 3'; 3") stehender objektbezogener Informationen eine Verbindung zwischen der mobilen Datenverarbeitungseinrichtung (1; 1'; 1") und einer Zentraleinrichtung (2; 2'; 2") hergestellt wird, wobei das Objekt (3; 3'; 3") von der Zentraleinrichtung (2; 2'; 2") entfernt ist und der Übertragungsschritt ausgelöst vom Erreichen einer vorgebbaren räumlichen Beziehung zwischen der mobilen Datenverarbeitungseinrichtung (1; 1'; 1") und dem Objekt (3; 3'; 3") erfolgt,
**dadurch gekennzeichnet, dass** vor dem Übertragen der Informationen an die mobile Datenverarbeitungseinrichtung (1; 1'; 1") ein Überprüfungsschritt erfolgt, in dem die Erfüllung wenigstens eines den Informationen bezüglich des jeweiligen Objekts zugeordneten zeitlichen Vergleichskriteriums, überprüft wird und in Abhängigkeit von der Erfüllung des zeitlichen Vergleichskriteriums die Übertragung der objektbezogenen Informationen an die mobile Datenverarbeitungseinrichtung (1; 1'; 1 ") freigegeben wird.

2. Verfahren nach Anspruch 1, **dadurch gekennzeichnet, dass** in einem Auslöseschritt zum Auslösen des Übertragungsschritts eine Ortsinformation bezüglich der mobilen Datenverarbeitungseinrichtung (1; 1'; 1") von der mobilen Datenverarbeitungseinrichtung (1; 1'; 1") an die Zentraleinrichtung (2; 2'; 2") gesandt wird.

3. Verfahren nach Anspruch 2, **dadurch gekennzeichnet, dass** das Übersenden der Ortsinformation ausgelöst vom Erreichen der vorgebbaren räumlichen Beziehung zwischen der mobilen Datenverarbeitungseinrichtung (1; 1'; 1") und dem Objekt (3; 3'; 3") erfolgt.

4. Verfahren nach Anspruch 2 oder 3, **dadurch gekennzeichnet, dass** das Übersenden der Informationen ausgelöst von einem an die Zentraleinrichtung (2; 2'; 2") gesandten Auslösesignal erfolgt, welches bei Erreichen der vorgebbaren Beziehung zwischen der mobilen Datenverarbeitungseinrichtung (1; 1'; 1") und dem Objekt (3; 3'; 3") erzeugt und an die Zentraleinrichtung gesandt wird.

5. Verfahren nach Anspruch 4, **dadurch gekennzeichnet, dass** das Auslösesignal beim oder nach dem Herstellen einer uni- oder bidirektionellen Kommunikationsverbindung zwischen einer der mobilen Datenverarbeitungseinrichtung (1; 1'; 1") zugeordneten ersten Sender- und/oder Empfängereinheit (16) und einer dem Objekt (3; 3') räumlich zugeordneten zweiten Sender- und/oder Empfängereinheit (17; 31) erzeugt wird.

6. Verfahren nach Anspruch 4 oder 5, **dadurch gekennzeichnet, dass** das Auslösesignal von der mobilen Datenverarbeitungseinrichtung (1; 1'; 1") erzeugt und an die Zentraleinrichtung (2; 2'; 2") gesandt wird.

7. Verfahren nach einem der vorhergehenden Ansprüche, **dadurch gekennzeichnet, dass** die mobile Datenverarbeitungseinrichtung (1; 1'; 1") eine erste Kennungsinformation an die Zentraleinrichtung (2; 2'; 2") sendet und vor dem Übertragen der objektbezogenen Informationen an die mobile Datenverarbeitungseinrichtung (1; 1'; 1") ein Autorisierungsschritt erfolgt, in dem die erste Kennungsinformation mit einer den objektbezogenen Informationen bezüglich des jeweiligen Objekts zugeordneten Autorisierungsinformation verglichen wird und in Abhängigkeit von der Erfüllung eines ersten Vergleichskriteriums die Übertragung der ersten Informationen an die mobile Datenverarbeitungseinrichtung (1; 1'; 1") freigegeben wird.

8. Verfahren nach einem der vorhergehenden Ansprüche, **dadurch gekennzeichnet, dass** die Informationen in Abhängigkeit vom Bestehen einer vorgebbaren räumlichen Beziehung zwischen der mobilen Datenverarbeitungseinrichtung (1; 1'; 1") und dem Objekt (3; 3'; 3") und/oder für einen vorgebbaren Zeitraum in der mobilen Datenverarbeitungseinrichtung (1; 1'; 1 ") verfügbar gehalten werden.

9. Verfahren nach einem der vorhergehenden Ansprüche, **dadurch gekennzeichnet, dass** die Zentraleinrichtung (2) die objektbezogenen Informationen über ein Datennetz (6), insbesondere das Internet, aus einem Informationsspeicher (5) abruft.

10. Verfahren nach einem der vorhergehenden Ansprüche, **dadurch gekennzeichnet, dass** die objektbezogenen Informationen mittels der mobilen Datenverarbeitungseinrichtung (1; 1'; 1") editiert und in einem Informationsspeicher (5) abgelegt werden, aus dem sie von der Zentraleinrichtung (2; 2'; 2") abgerufen werden.

11. System zum Übertragen von Informationen zu einer mobilen Datenverarbeitungseinrichtung, mit wenigstens einer Zentraleinrichtung (2; 2'; 2") und wenigstens einer mobilen Datenverarbeitungseinrichtung (1; 1'; 1"), die zum Übertragen in Bezug zu wenigstens einem Objekt (3; 3'; 3") stehender objektbezogener Informationen über eine Verbindung zwischen der mobilen Datenverarbeitungseinrichtung (1; 1'; 1 ") und der Zentraleinrichtung jeweils eine Kommunikationseinrichtung (11, 12) aufweisen, wobei das Objekt (3; 3'; 3") von der Zentraleinrichtung (2; 2'; 2") entfernt angeordnet ist und Auslösemittel (16, 18; 32) vorgesehen sind, die zum Auslösen der Übertragung der objektbezogenen Informationen von der Zentraleinrichtung (2; 2'; 2") zur mobilen Datenverarbeitungseinrichtung (1; 1'; 1") bei Erreichen einer vorgebbaren räumlichen Beziehung zwischen der mobilen Datenverarbeitungseinrichtung (1; 1'; 1") und dem Objekt (3; 3'; 3") ausgebildet sind,
**dadurch gekennzeichnet, dass** eine Überprüfungseinrichtung (21.3) vorgesehen ist, die zur Überprüfung der Erfüllung wenigstens eines den objektbezogenen Informationen bezüglich des jeweiligen Objekts zugeordneten zeitlichen Vergleichskriteriums, und zum Freigeben der Übertragung der objektbezogenen Informationen an die mobile Datenverarbeitungseinrichtung (1) in Abhängigkeit von der Erfüllung des Vergleichskriteriums ausgebildet ist.

12. System nach Anspruch 11, **dadurch gekennzeichnet, dass** wenigstens erste Lokalisierungsmittel mit einer Lokalisierungseinheit (18; 32) zum Erzeugen einer Ortsinformation bezüglich der mobilen Datenverarbeitungseinrichtung (1; 1'; 1") vorgesehen sind, wobei die Lokalisierungsmittel zum Senden der Ortsinformation an die Zentraleinrichtung (2; 2') ausgebildet sind.

13. System nach Anspruch 12, **dadurch gekennzeichnet, dass** die Lokalisierungsmittel (18; 32) der mobilen Datenverarbeitungseinrichtung (1; 1') zugeordnet sind, insbesondere in diese integriert sind.

14. System nach Anspruch 12 oder 13, **dadurch gekennzeichnet, dass** die Lokalisierungseinheit (18; 32) zum Erzeugen einer Ortsinformation ausgebildet ist, die eine Information über die räumliche Beziehung zwischen der mobilen Datenverarbeitungseinrichtung (1; 1') und dem Objekt (3; 3') enthält.

15. System nach einem der Ansprüche 12 bis 14, **dadurch gekennzeichnet, dass** zum Übersenden der Ortsinformation ausgelöst vom Erreichen der vorgebbaren räumlichen Beziehung zwischen der mobilen Datenverarbeitungseinrichtung (1; 1') und dem Objekt die Lokalisierungsmittel (18; 32) zum Erfassen des Erreichens der vorgebbaren räumlichen Beziehung zwischen der mobilen Datenverarbeitungseinrichtung (1; 1') und dem Objekt (3; 3') ausgebildet sind.

16. System nach einem der Ansprüche 12 bis 15, **dadurch gekennzeichnet, dass** zum Übersenden der Informationen ausgelöst von einem an die Zentraleinrichtung (2; 2') gesandten Auslösesignal die Lokalisierungseinheit (18; 32) zum Erzeugen einer Ortsinformation ausgebildet ist, die das Auslösesignal enthält.

17. System nach Anspruch 16, **dadurch gekennzeichnet, dass** eine der mobilen Datenverarbeitungseinrichtung (1) zugeordnete erste Sender- und/oder Empfängereinheit (16) und eine dem Objekt (3) räumlich zugeordnete zweite Sender- und/oder Empfängereinheit (17) vorgesehen ist sind und die Lokalisierungseinheit (18) mit der ersten und/oder zweiten Sender- und/oder Empfängereinheit (16, 17) verbunden und zum Erzeugen und Senden des Auslösesignals beim oder nach dem Herstellen einer uni- oder bidirektionellen Kommunikationsverbindung zwischen der ersten Sender- und/oder Empfängereinheit (16) und der zweiten Sender- und/oder Empfängereinheit (17) ausgebildet ist.

18. System nach einem der Ansprüche 11 bis 17, **dadurch gekennzeichnet, dass** die mobile Datenverarbeitungseinrichtung (1) eine erste Speichereinrichtung (19) zum Speichern einer ersten Kennungsinformation aufweist, die zum Senden der ersten Kennungsinformation an die Zentraleinrichtung (2) mit der Kommunikationseinrichtung (11) verbunden ist, und die Zentraleinrichtung (2) eine Autorisierungseinrichtung (21.2) umfasst, die mit einer zweiten Speichereinrichtung (22) zum Speichern wenigstens einer den objektbezoegnen Informationen bezüglich des jeweiligen Objekts zugeordneten Autorisierungsinformation verbunden ist und die zum Vergleichen der ersten Kennungsinformation mit der Autorisierungsinformation sowie zum Freigeben der Übertragung der objektbezogenen Informationen an die mobile Datenverarbeitungseinrichtung (1) in Abhängigkeit von der Erfüllung eines ersten Vergleichskriteriums ausgebildet ist.

19. System nach einem der Ansprüche 11 bis 18, **dadurch gekennzeichnet, dass** die mobile Datenverarbeitungseinrichtung (1; 1'; 1") zum Verfügbarhalten der objektbezogenen Informationen in Abhängigkeit vom Bestehen einer vorgebbaren räumlichen Beziehung zwischen der mobilen Datenverarbeitungseinrichtung (1; 1'; 1") und dem Objekt (3; 3'; 3") und/oder zum Verfügbarhalten der objektbezogenen Informationen für einen vorgebbaren Zeitraum ausgebildet ist.

20. System nach einem der Ansprüche 11 bis 19, **dadurch gekennzeichnet, dass** die Zentraleinrichtung (2) zum Abrufen der objektbezogenen Informationen über ein Datennetz (6), insbesondere das Internet, aus einem Informationsspeicher (5) ausgebildet ist.

21. System nach einem der Ansprüche 11 bis 20, **dadurch gekennzeichnet, dass** die mobile Datenverarbeitungseinrichtung (1) eine Editiereinrichtung (24, 15) zum Erzeugen und Verändern der objektbezogenen Informationen und sowie eine Einrichtung zum Ablegen der objektbezogenen Informationen in einem Informationsspeicher (5), aus dem sie von der Zentraleinrichtung (2) abrufbar sind, aufweist.

22. Vorrichtung zur Verwendung in einem System zur Übertragung von in Bezug zu wenigstens einem Objekt (3; 3'; 3") stehender objektbezogener Informationen von einer Zentraleinrichtung (2; 2'; 2") zu einer mobilen Datenverarbeitungseinrichtung (1; 1'; 1 ") nach einem der Ansprüche 11 bis 21, mit Auslösemitteln (16, 18; 32), die zum Auslösen der Übertragung der objektbezogenen Informationen von der Zentraleinrichtung (2; 2'; 2") zur mobilen Datenverarbeitungseinrichtung (1; 1'; 1") bei Erreichen einer vorgebbaren räumlichen Beziehung zwischen der mobilen Datenverarbeitungseinrichtung (1; 1'; 1") und dem Objekt (3; 3'; 3") ausgebildet sind,
**dadurch gekennzeichnet, dass** eine Überprüfungseinrichtung (21.3) zur Überprüfung der Erfüllung wenigstens eines den objektbezogenen Informationen bezüglich des jeweiligen Objekts zugeordneten zeitlichen Vergleichskriteriums,-und zum Freigeben der Übertragung der ersten objektbezogenen Informationen an die mobile Datenverarbeitungseinrichtung (1) in Abhängigkeit von der Erfüllung des zweiten Vergleichskriteriums vorgesehen ist.

23. Vorrichtung nach Anspruch 22, **dadurch gekennzeichnet, dass** eine Autorisierungseinrichtung (21.2) vorgesehen ist, die mit einer zweiten Speichereinrichtung (22) zum Speichern wenigstens einer den objektbezogenen Informationen bezüglich des jeweiligen Objekts zugeordneten Autorisierungsinformation verbunden ist und zum Vergleichen einer der mobilen Datenverarbeitungseinrichtung (1) zugeordneten ersten Kennungsinformation mit der Autorisierungsinformation sowie zum Freigeben der Übertragung der objektbezogenen Informationen an die mobile Datenverarbeitungseinrichtung (1) in Abhängigkeit von der Erfüllung eines Vergleichskriteriums ausgebildet ist.

24. Vorrichtung nach einem der Ansprüche 22 bis 23, **dadurch gekennzeichnet, dass** sie von der Zentraleinrichtung (2; 2'; 2") gebildet ist.

25. Vorrichtung nach einem der Ansprüche 22 bis 24, **dadurch gekennzeichnet, dass** sie von der mobilen Datenverarbeitungseinrichtung gebildet ist.

## Claims

1. Method for transmitting information to a mobile data processing device, in which in a transmission step for transmitting object-related information in relation to at least one object (3; 3'; 3") a connection is produced between the mobile data processing device (1; 1'; 1") and a central device (2; 2'; 2"), wherein the object (3; 3'; 3") is remote from the central device (2; 2'; 2") and the transmission step takes place triggered by reaching a predeterminable spatial relationship between the mobile data processing device (1; 1'; 1'') and the object (3; 3'; 3"), **characterised in that** before the transmission of the information to the mobile data processing device (1; 1'; 1'') a checking step takes place in which the fulfilling of at least one time comparison criterion associated with the information with regard to the respective object is checked, and, as a function of the fulfilling of the time comparison criterion, the transmission of the object-related information to the mobile data processing device (1; 1' ; 1'') is enabled.

2. Method according to claim 1, **characterised in that** in a triggering step to trigger the transmission step, local information with regard to the mobile data processing device (1; 1'; 1") is sent from the mobile data processing device (1; 1'; 1") to the central device (2; 2'; 2").

3. Method according to claim 2, **characterised in that** the local information is sent triggered by reaching the predeterminable spatial relationship between the mobile data processing device (1; 1'; 1'') and the object (3; 3'; 3'').

4. Method according to claim 2 or 3, **characterised in that** the information is sent triggered by a triggering signal sent to the central device (2; 2'; 2"), which triggering signal, on reaching the predeterminable relationship between the mobile data processing device (1; 1' ; 1") and the object (3; 3'; 3") is generated and sent to the central device.

5. Method according to claim 4, **characterised in that** the triggering signal is generated during or after the production of a unidirectional or bidirectional communication connection between a first transmitting and/or receiving device (16) associated with the mobile data processing device (1; 1'; 1") and a second transmitting and/or receiving device (17; 31) spatially associated with the object (3; 3').

6. Method according to claim 4 or 5, **characterised in that** the triggering signal is generated by the mobile data processing device (1; 1'; 1'') and sent to the central device (2; 2'; 2").

7. Method according to any one of the preceding claims, **characterised in that** the mobile data processing device (1; 1'; 1") sends first identifying information to the central device (2; 2'; 2") and, before the transmission of the object-related information to the mobile data processing device (1; 1'; 1"), an authorisation step takes place in which the first identifying information is compared with authorisation information associated with the object-related information with respect to the respective object and, as a function of the fulfilment of a first comparison criterion, the transmission of the first information to the mobile data processing device (1; 1'; 1") is enabled.

8. Method according to any one of the preceding claims, **characterised in that** the information is kept available as a function of the existence of a predeterminable spatial relationship between the mobile data processing device (1; 1'; 1'') and the object (3; 3'; 3'') and/or for a predeterminable period in the mobile data processing device (1; 1'; 1'').

9. Method according to any one of the preceding claims, **characterised in that** the central device (2) retrieves the object-related information via a data network (6), in particular the internet, from an information memory (5).

10. Method according to any one of the preceding claims, **characterised in that** the object-related information is edited by means of the mobile data processing device (1; 1' ; 1'') and is stored in an information memory (5), from which it is retrieved by the central device (2; 2'; 2'').

11. System for transmitting information to a mobile data processing device, with at least a central device (2; 2'; 2") and at least a mobile data processing device (1; 1'; 1"), which in each case have a communication device (11, 12) for transmission of object-related information in relation to at least one object (3; 3'; 3") via a connection between the mobile data processing device (1; 1'; 1") and the central device, wherein the object (3; 3'; 3") is arranged remote from the central device (2; 2'; 2") and triggering means (16, 18; 32) are provided which are configured to trigger the transmission of the object-related information from the central device (2; 2'; 2") to the mobile data processing device (1; 1'; 1") on reaching a predeterminable spatial relationship between the mobile data processing device (1; 1'; 1") and the object (3; 3'; 3"), **characterised in that** a checking device (21.3) is provided which is configured to check the fulfilment of at least one time comparison criterion associated with the object-related information with regard to the respective object, and to enable the transmission of the object-related information to the mobile data processing device (1) as a function of the fulfilment of the comparison criterion.

12. System according to claim 11, **characterised in that** at least first localisation means with a localisation unit (18; 32) for generating local information with regard to the mobile data processing device (1; 1'; 1'') are provided, the localisation means being configured to send local information to the central device (2; 2').

13. System according to claim 12, **characterised in that** the localisation means (18; 32) are associated with the mobile data processing device (1; 1'), in particular integrated therein.

14. System according to claim 12 or 13, **characterised in that** the localisation unit (18; 32) is configured to generate local information, which contains information about the spatial relationship between the mobile data processing device (1; 1') and the object (3; 3').

15. System according to any one of claims 12 to 14,
**characterised in that** to transmit the local information triggered on reaching the predeterminable spatial relationship between the mobile data processing device (1; 1') and the object, the localisation means (18; 32) are configured to detect the reaching of the predeterminable spatial relationship between the mobile data processing device (1; 1') and the object (3; 3').

16. System according to any one of claims 12 to 15, **characterised in that** to transmit information triggered by a triggering signal sent to the central device (2; 2'), the localisation unit (18; 32) is configured to generate local information which the triggering signal contains.

17. System according to claim 16, **characterised in that** a first transmitting and/or receiving unit (16) associated with the mobile data processing device (1) and a second transmitting and/or receiving unit (17) spatially associated with the object (3) are provided and the localisation unit (18) is connected to the first and/or second transmitting and/or receiving unit (16, 17) to generate and send the triggering signal during or after the production of a unidirectional or bidirectional communication connection between the first transmitting and/or receiving unit (16) and the second transmitting and/or receiving unit (17).

18. System according to any one of claims 11 to 17, **characterised in that** the mobile data processing device (1) has a first memory device (19) for storing first identifying information, which to send the first identifying information to the central device (2) is connected to the communication device (11), and the central device (2) comprises an authorisation device (21.2), which is connected to a second memory device (22) for storing at least authorisation information associated with the object-related information with regard to the respective object, and which is configured to compare the first identifying information with the authorisation information and to enable the transmission of the object-related information to the mobile data processing device (1) as a function of the fulfilment of a first comparison criterion.

19. System according to any one of claims 11 to 18,
**characterised in that** the mobile data processing device (1; 1'; 1") is configured to keep available the object-related information as a function of the existence of a predeterminable spatial relationship between the mobile data processing device (1; 1'; 1") and the object (3; 3'; 3") and/or for keeping available the object-related information for a predeterminable period.

20. System according to any one of claims 11 to 19, **characterised in that** the central device (2) is configured to retrieve the object-related information via a data network (6), in particular the internet, from an information memory (5).

21. System according to any one of claims 11 to 20,
**characterised in that** the mobile data processing device (1) has an editing device (24, 15) for generating and changing the object-related information and a device for storing the object-related information in an information memory (5), from which it can be retrieved by the central device (2).

22. Mechanism for use as a system for transmitting object-related information in relation to at least one object (3; 3'; 3") from a central device (2; 2'; 2") to a mobile data processing device (1; 1'; 1") according to any one of claims 11 to 21, with triggering means (16, 18; 32), which are configured to trigger the transmission of the object-related information from the central device (2; 2'; 2") to the mobile data processing device (1; 1'; 1") on reaching a predeterminable spatial relationship between the mobile data processing device (1; 1'; 1") and the object (3; 3'; 3"), **characterised in that** a checking device (21.3) for checking the fulfilment of at least one time comparison criterion associated with the object-related information with regard to the respective object, and for enabling the transmission of the first object-related information to the mobile data processing device (1) is provided as a function of the fulfilment of the second comparison criterion.

23. Mechanism according to claim 22, **characterised in that** an authorisation device (21.2) is provided, which is connected to a second memory device (22) for storing at least authorisation information associated with the object-related information with regard to the respective object and is configured to compare first identifying information associated with the mobile data processing device (1) with the authorisation information, as well as to enable the transmission of the object-related information to the mobile data processing device (1) as a function of the fulfilment of a comparison criterion.

24. Mechanism according to any one of claims 22 to 23, **characterised in that** it is formed by the central device (2; 2' ; 2").

25. Mechanism according to any one of claims 22 to 24, **characterised in that** it is formed by the data processing device.

## Revendications

1. Procédé de transmission d'informations vers un dispositif mobile de traitement de données, dans lequel une liaison entre le dispositif mobile de traitement de données (1 ; 1' ; 1") et un dispositif central (2 ; 2' ; 2") est établie lors d'une étape de transmission pour transmettre des informations ayant trait à un objet concernant au moins un objet (3 ; 3' ; 3"), dans lequel l'objet (3 ; 3' ; 3") est éloigné du dispositif central (2 ; 2' ; 2") et l'étape de transmission, déclenchée lorsqu'une relation spatiale pouvant être prédéfinie entre le dispositif mobile de traitement de données (1 ; 1' ; 1") et l'objet (3 ; 3' ; 3") est obtenue, est effectuée,
**caractérisé en ce que**, avant la transmission des informations au dispositif mobile de traitement de données (1 ; 1' ; 1"), une étape de vérification est effectuée, dans laquelle le respect d'au moins au critère de comparaison temporel associé à l'information concernant l'objet respectif est vérifié et conformément au respect du critère de comparaison temporel, la transmission des informations ayant trait à un objet au dispositif mobile de traitement de données (1 ; 1' ; 1") est autorisée.

2. Procédé selon la revendication 1, **caractérisé en ce que**, au cours d'une étape de déclenchement, pour déclencher l'étape de transmission, une information de lieu concernant le dispositif mobile de traitement de données (1; 1' ; 1") est envoyée par le dispositif mobile de traitement de données (1 ; 1' ; 1") au dispositif central (2 ; 2' ; 2").

3. Procédé selon la revendication 2, **caractérisé en ce que** l'envoi de l'information de lieu, déclenché lorsque la relation spatiale pouvant être prédéfinie entre le dispositif mobile de traitement de données (1 ; 1' ; 1") et l'objet (3 ; 3' ; 3") est obtenue, est effectué.

4. Procédé selon la revendication 2 ou 3,
**caractérisé en ce que** l'envoi des informations déclenchées par un signal de déclenchement envoyé au dispositif central (2 ; 2' ; 2") est effectué, qui est généré, lorsque la relation pouvant être prédéfinie entre le dispositif mobile de traitement de données (1 ; 1'; 1") et l'objet (3 ; 3' ; 3") est obtenue, et envoyé au dispositif central.

5. Procédé selon la revendication 4, **caractérisé en ce que** le signal de déclenchement est généré lors ou après l'établissement d'une liaison de communication unidirectionnelle ou bidirectionnelle entre une première unité émettrice et/ou réceptrice (16) associée au dispositif mobile de traitement de données (1 ; 1' ; 1") et une seconde unité émettrice et/ou réceptrice (17 ; 31) associée spatialement à l'objet (3 ; 3').

6. Procédé selon la revendication 4 ou 5,
**caractérisé en ce que** le signal de déclenchement est généré par le dispositif mobile de traitement de données (1 ; 1' ; 1") et envoyé au dispositif central (2 ; 2' ; 2").

7. Procédé selon l'une des revendications précédentes, **caractérisé en ce que** le dispositif mobile de traitement de données (1 ; 1' ; 1") envoie une première information caractéristique au dispositif central (2 ; 2' ; 2") et, avant la transmission des informations ayant trait à un objet au dispositif mobile de traitement de données (1 ; 1' ; 1"), une étape d'autorisation est effectuée, dans laquelle la première information caractéristique est comparée à une information d'autorisation associée aux informations ayant trait à un objet concernant l'objet respectif et, conformément au respect d'un premier critère de comparaison, la transmission des premières informations au dispositif mobile de traitement de données (1 ; 1' ; 1") est autorisée.

8. Procédé selon l'une des revendications précédentes, **caractérisé en ce que** les informations sont gardées à disposition dans le dispositif mobile de traitement de données (1 ; 1' ; 1") conformément à l'existence d'une relation spatiale pouvant être prédéfinie entre le dispositif mobile de traitement de données (1 ; 1'; 1") et l'objet (3 ; 3' ; 3") et/ou pour une période de temps pouvant être prédéfinie.

9. Procédé selon l'une des revendications précédentes, **caractérisé en ce que** le dispositif central (2) extrait les informations ayant trait à un objet d'une mémoire d'information (5) par l'intermédiaire d'un réseau de données (6), en particulier Internet.

10. Procédé selon l'une des revendications précédentes, **caractérisé en ce que** les informations ayant trait à un objet sont éditées grâce au dispositif mobile de traitement de données (1 ; 1' ; 1") et sont mémorisées dans la mémoire d'information (5), de laquelle elles sont extraites par le dispositif central (2 ; 2' ; 2").

11. Système de transmission d'informations vers un dispositif mobile de traitement de données, comportant au moins un dispositif central (2 ; 2' ; 2") et au moins un dispositif mobile de traitement de données (1 ; 1' ; 1"), qui présentent respectivement un dispositif de communication (11, 12) pour transmettre des informations ayant trait à un objet concernant au moins un objet (3 ; 3' ; 3") par l'intermédiaire d'une liaison entre le dispositif mobile de traitement de données (1 ; 1' ; 1") et le dispositif central, dans lequel l'objet (3 ; 3' ; 3") est disposé éloigné du dispositif central (2 ; 2' ; 2") et des moyens de déclenchement (16, 18 ; 32) sont prévus, qui sont réalisés pour déclencher la transmission des informations ayant trait à un objet du dispositif central (2 ; 2' ; 2") vers le dispositif mobile de traitement de données (1 ; 1' ; 1"), lorsqu'une relation spatiale pouvant être prédéfinie entre le dispositif mobile de traitement de données (1 ; 1' ; 1") et l'objet (3 ; 3' ; 3") est obtenue,
**caractérisé en ce qu'**un dispositif de vérification (21.3) est prévu, qui est réalisé pour vérifier le respect d'un critère temporel de comparaison associé aux informations ayant trait à un objet concernant l'objet respectif, et pour autoriser la transmission des informations ayant trait à un objet au dispositif mobile de traitement de données (1) conformément au respect du critère de comparaison.

12. Système selon la revendication 11, **caractérisé en ce qu'**au moins des premiers moyens de localisation comportant une unité de localisation (18 ; 32) pour générer une information de lieu concernant le dispositif mobile de traitement de données (1 ; 1' ; 1"), dans lequel les moyens de localisation sont réalisés pour émettre l'information de lieu au dispositif central (2 ; 2').

13. Système selon la revendication 12, **caractérisé en ce que** les moyens de localisation (18 ; 32) sont associés au dispositif mobile de traitement de données (1 ; 1'), en particulier sont intégrés dans celle-ci.

14. Système selon la revendication 12 ou 13,
**caractérisé en ce que** l'unité de localisation (18 ; 32) est réalisée pour générer une information de lieu, qui contient une information concernant la relation spatiale entre le dispositif mobile de traitement de données (1 ; 1') et l'objet (3 ; 3').

15. Système selon l'une des revendications 12 à 14, **caractérisé en ce que**, pour émettre l'information de lieu déclenchée lorsque la relation spatiale pouvant être prédéfinie entre le dispositif mobile de traitement de données (1 ; 1') et l'objet est obtenue, les moyens de localisation (18 ; 32) sont réalisés pour détecter lorsque la relation spatiale pouvant être prédéfinie entre le dispositif mobile de traitement de données (1 ; 1') et l'objet (3 ; 3') est obtenue.

16. Système selon l'une des revendications 12 à 15, **caractérisé en ce que**, pour émettre les informations, déclenché par un signal de déclenchement envoyé au dispositif central (2 ; 2' ; 2"), l'unité de localisation (18 ; 32) est réalisée pour générer une information de lieu, qui contient le signal de déclenchement.

17. Système selon la revendication 16, **caractérisé en ce qu'**une première unité émettrice et/ou réceptrice (16) associée au dispositif mobile de traitement de données (1) et une seconde unité émettrice et/ou réceptrice (17) associée spatialement à l'objet (3) sont prévues et l'unité de localisation (18) est reliée à la première et/ou à la seconde unité émettrice et/ou réceptrice (16, 17) et est réalisée pour générer et envoyer le signal de déclenchement pendant ou après l'établissement d'une liaison de communication unidirectionnelle ou bidirectionnelle entre la première unité émettrice et/ou réceptrice (16) et la seconde unité émettrice et/ou réceptrice (17).

18. Système selon l'une des revendications 11 à 17, **caractérisé en ce que** le dispositif mobile de traitement de données (1) présente un premier dispositif de mémorisation (19) pour mémoriser une première information caractéristique, qui est relié au dispositif de communication (11) pour l'envoi de la première information caractéristique au dispositif central (2), et le dispositif central (2) comprend un dispositif d'autorisation (21.2), qui est relié au second dispositif de mémorisation (22) pour mémoriser une information d'autorisation associée à au moins une information ayant trait à un objet concernant l'objet respectif et qui est réalisé en vue de la comparaison de la première information caractéristique à l'information d'autorisation ainsi que pour autoriser la transmission des informations ayant trait à un objet au dispositif mobile de traitement de données (1) conformément au respect d'un premier critère de comparaison.

19. Système selon l'une des revendications 11 à 18, **caractérisé en ce que** le dispositif mobile de traitement de données (1 ; 1' ; 1") est réalisé pour garder à disposition les informations ayant trait à un objet conformément à l'existence d'une relation spatiale pouvant être prédéfinie entre le dispositif mobile de traitement de données (1 ; 1'; 1") et l'objet (3 ; 3' ; 3") et/ou pour garder à disposition les informations ayant trait à un objet pour un temps pouvant être prédéfini.

20. Système selon l'une des revendications Il à 19, **caractérisé en ce que** le dispositif central (2) est réalisé pour extraire les informations ayant trait à un objet d'une mémoire d'information (5) par l'intermédiaire d'un réseau de données (6), en particulier Internet.

21. Système selon l'une des revendications 11 à 20, **caractérisé en ce que** le dispositif mobile de traitement de données (1) présente un dispositif d'édition (24, 15) pour générer et modifier les informations ayant trait à un objet ainsi qu'un dispositif pour mémoriser les informations ayant trait à un objet dans une mémoire d'information (5), de laquelle elles peuvent être extraites par le dispositif central (2).

22. Dispositif utilisé dans un système de transmission d'informations ayant trait à un objet concernant au moins un objet (3 ; 3' ; 3") d'un dispositif central (2 ; 2' ; 2") vers un dispositif mobile de traitement de données (1 ; 1' ; 1") selon l'une des revendications 11 à 21, comportant des moyens de déclenchement (16, 18 ; 32), qui sont réalisés pour déclencher la transmission des informations ayant trait à un objet du dispositif central (2 ; 2' ; 2") vers le dispositif mobile de traitement de données (1 ; 1' ; 1") lorsqu'une relation spatiale pouvant être prédéfinie entre le dispositif mobile de traitement de données (1 ; 1' ; 1") et l'objet (3 ; 3' ; 3") est obtenue,
**caractérisé en ce qu'**un dispositif de vérification (21.3) est prévu pour vérifier le respect d'au moins un critère temporel de comparaison associé aux informations ayant trait à un objet concernant l'objet respectif, et pour autoriser la transmission des informations ayant trait à un objet au dispositif mobile de traitement de données (1) conformément au respect du second critère de comparaison.

23. Dispositif selon la revendication 22, **caractérisé en ce qu'**un dispositif d'autorisation (21.2) est prévu, qui est relié à un second dispositif de mémorisation (22) pour mémoriser au moins une information d'autorisation associée aux informations ayant trait à un objet concernant l'objet respectif et pour comparer une première information caractéristique associée au dispositif mobile de traitement de données (1) à l'information d'autorisation ainsi que pour autoriser la transmission des informations ayant trait à un objet au dispositif mobile de traitement de données (1) conformément au respect d'un critère de comparaison.

24. Dispositif selon l'une des revendications 22 à 23, **caractérisé en ce qu'**il est formé par le dispositif central (2 ; 2' ; 2").

25. Dispositif selon l'une des revendications 22 à 24, **caractérisé en ce qu'**il est formé par le dispositif mobile de traitement de données.
